(19) Europäisches Patentamt
European Patent Office
Office européen des brevets

(11) EP 1 813 152 A1

(12) EUROPÄISCHE PATENTANMELDUNG

(43) Veröffentlichungstag:
**01.08.2007 Patentblatt 2007/31**

(51) Int Cl.:
***A01N 43/56*** *(2006.01)* ***A01P 3/00*** *(2006.01)*

(21) Anmeldenummer: **06101045.0**

(22) Anmeldetag: **30.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **BASF AKTIENGESELLSCHAFT**
**67056 Ludwigshafen (DE)**

(72) Erfinder:
- **Dietz, Jochen, Dr.**
  **68167 Mannheim (DE)**
- **Gewehr, Markus, Dr.**
  **56288 Kastellaun (DE)**
- **Strathmann, Siegfried, Dr.**
  **67117 Limburgerhof (DE)**
- **Stierl, Reinhard, Dr.**
  **67251 Freinsheim (DE)**
- **Werner, Frank, Dr.**
  **67434 Neustadt (DE)**
- **Scherer, Maria**
  **76829 Landau (DE)**

(54) **Fungizide Mischung auf der Basis von 3,4-disubstituierten Biphenylaniliden**

(57) Fungizide Mischungen, enthaltend als aktive Komponenten
1) 3,4-disubstituierte Biphenylanilide der Formel I

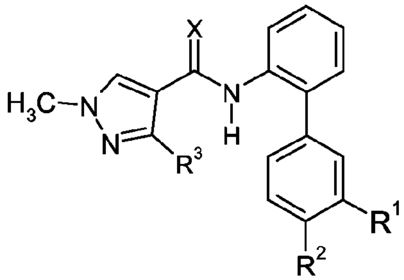
(I),

in der X für Sauerstoff oder Schwefel, $R^1$ und $R^2$ unabhängig voneinander für Fluor, Chlor, Methyl, Cyano, Nitro, Methoxy oder Trifluormethyl und $R^3$ für Difluormethyl oder Trifluormethyl stehen,
und
2) mindestens einen Wirkstoff II ausgewählt aus den folgenden Gruppen A) bis F):
*A*) Azole,
*B*) Strobilurine,
*C*) Carbonsäureamide,
*D)* Heterocyclische Verbindungen,
*E)* Carbamate,
*F*) Sonstige Fungizide;

in einer synergistisch wirksamen Menge, Verfahren zur Bekämpfung von Schadpilzen mit Mischungen aus mindestens einer Verbindung I und mindestens einem Wirkstoff II, die Verwendung der Verbindungen I mit Wirkstoffen II zur Herstellung derartiger Mischungen sowie Mittel und Saatgut enthaltend diese Mischungen.

EP 1 813 152 A1

## Beschreibung

Die vorliegende Erfindung betrifft Fungizide Mischungen, enthaltend als aktive Komponenten

1) mindestens ein 3,4-disubstituiertes Biphenylanilid der Formel I

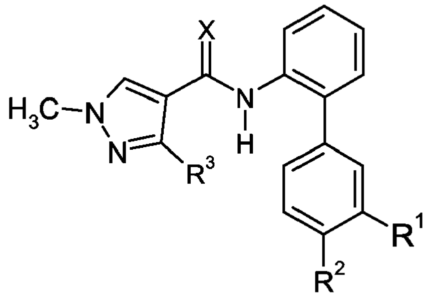

(I),

in der X für Sauerstoff oder Schwefel, $R^1$ und $R^2$ unabhängig voneinander für Fluor, Chlor, Methyl, Cyano, Nitro, Methoxy oder Trifluormethyl und $R^3$ für Difluormethyl oder Trifluormethyl stehen,
und
2) mindestens einen Wirkstoff II ausgewählt aus den folgenden Gruppen A) bis F):

A) Azole, ausgewählt aus Bitertanol, Bromuconazol, Cyproconazol, Difenoconazol, Diniconazol, Enilconazol, Epoxiconazol, Fluquinconazol, Fenbuconazol, Flusilazol, Flutriafol, Hexaconazol, Imibenconazol, Ipconazol, Metconazol, Myclobutanil, Penconazol, Propiconazol, Prothioconazol, Simeconazol, Triadimefon, Triadimenol, Tebuconazol, Tetraconazol, Triticonazol, Prochloraz, Pefurazoate, Imazalil, Triflumizol, Cyazofamid, Benomyl, Carbendazim, Thiabendazol, Fuberidazol, Ethaboxam, Etridiazol, Hymexazol;

B) Strobilurine, ausgewählt aus Azoxystrobin, Dimoxystrobin, Enestroburin, Fluoxastrobin, Kresoxim-methyl, Methominostrobin, Orysastrobin, Picoxystrobin, Pyraclostrobin, Trifloxystrobin, Enestroburin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester und 2-ortho-[(2,5-Dimethylphenyl-oxymethylen)phenyl]-3-methoxy-acrylsäuremethylester;

C) Carbonsäureamide, ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamid, Tiadinil, 3,4-Dichlor-N-(2-cyanophenyl)-isothiazol-5-carbonsäureamid, Dimethomorph, Flumorph, Flumetover, Fluopicolid (Picobenzamid), Zoxamid, Carpropamid, Diclocymet, Mandipropamid, N-(2-(4-[3-(4-Chlor-phenyl)-prop-2-ynyloxy]-3-methoxy-phenyl)-ethyl)-2-methansulfonylamino-3-methyl-butyramid, N-(2-(4-[3-(4-Chlor-phenyl)-prop-2-ynyloxy]-3-methoxy-phenyl)-ethyl)-2-ethansulfonylamino-3-methyl-butyramid, 3-(4-Chlor-phenyl)-3-(2-isopropoxy-carbonylamino-3-methyl-butyrylamino)-propionsäure-methylester, 4-Difluormethyl-2-methyl-thiazol-5-carbonsäure-N-(4'-brom-biphenyl-2-yl)-amid, 4-Difluormethyl-2-methyl-thiazol-5-carbonsäure-N-(4'-trifluormethyl-biphenyl-2-yl)-amid, 4-Difluormethyl-2-methyl-thiazol-5-carbonsäure-N-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid und 3,4-Dichlorisothiazol-5-carbonsäure-N-(2-cyano-phenyl)-amid;

D) Heterocyclische Verbindungen, ausgewählt aus Fluazinam, Pyrifenox, Bupirimat, Cyprodinil, Fenarimol, Ferimzon, Mepanipyrim, Nuarimol, Pyrimethanil, Triforin, Fenpiclonil, Fludioxonil, Aldimorph, Dodemorph, Fenpropimorph, Tridemorph, Fenpropidin, Iprodion, Procymidon, Vinclozolin, Famoxadon, Fenamidon, Octhilinon, Probenazol, 5-Chlor-7-(4-methylpiperidin-1-yl)-6-(2,4,6-trifluor-phenyl)-[1,2,4]triazolo[1,5-a]pyrimidin, Anilazin, Diclomezin, Pyroquilon, Proquinazid, Tricyclazol, die Verbindung der Formel III (2-Butoxy-6-iodo-3-propyl-chromen-4-on)

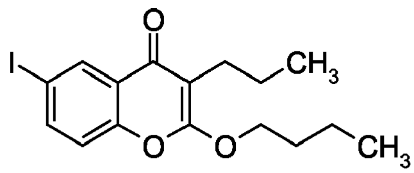

III,

Acibenzolar-S-methyl, Captafol, Captan, Dazomet, Folpet, Fenoxanil, Quinoxyfen, 3-(3-Brom-6-fluor-2-methyl-indol-1-sulfonyl)-[1,2,4]triazol-1-sulfonsäuredimethylamid;

E) Carbamate, ausgewählt aus Mancozeb, Maneb, Metam, Metiram, Ferbam, Propineb, Thiram, Zineb, Ziram, Diethofencarb, Iprovalicarb, Flubenthiavalicarb, Propamocarb, N-(1-(1-(4-cyanophenyl)ethanesulfonyl)-but-2-yl)-carbaminsäure-(4-fluorphenyl)ester, 3-(4-Chlor-phenyl)-3-(2-isopropoxy-carbonylamino-3-methyl-butyrylamino)-propansäuremethylester,(2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester;

F) Sonstige Fungizide, ausgewählt aus
Guanidine: Dodin, Iminoctadin, Guazatin,
Antibiotika: Kasugamycin, Streptomycin, Polyoxin, Validamycin A, Nitrophenylderivate: Binapacryl, Dinocap, Dinobuton,
Schwefelhaltige Heterocyclylverbindungen: Dithianon, Isoprothiolan, Organometallverbindungen: Fentin Salze wie Fentin-acetat, Organophosphorverbindungen: Edifenphos, Iprobenfos, Fosetyl, Fosetyl-Aluminium, Phosphorige Säure und ihre Salze, Pyrazophos, Tolclofos-methyl,
Organochlorverbindungen: Chlorothalonil, Dichlofluanid, Flusulfamid, Hexachlorbenzol, Phthalid, Pencycuron, Quintozen, Thiophanat-Methyl, Tolylfluanid,
Anorganische Wirkstoffe: Bordeaux Brühe, Kupferacetat, Kupferhydroxid, Kupferoxychlorid, basisches Kupfersulfat, Schwefel,
Sonstige: Cyflufenamid, Cymoxanil, Dimethirimol, Ethirimol, Furalaxyl, Metrafenon und Spiroxamin;

in einer synergistisch wirksamen Menge.

Außerdem betrifft die Erfindung ein Verfahren zur Bekämpfung von Schadpilzen mit Mischungen aus mindestens einer Verbindung I und mindestens einem der Verbindungen I mit Wirkstoffen II und die Verwendung der Wirkstoffe II zur Herstellung derartiger Mischungen sowie Mittel und Saatgut enthaltend diese Mischungen.

Substituierte Biphenylanilide der Formel I sind aus der EP-A 589301 bekannt, in der auch ein Verfahren zu deren Herstellung sowie eine Liste möglicher Mischungspartner aus der Reihe der Fungizide, Bakterizide, Akarizide, Nematizide oder Insektizide angegeben ist.

Aus der WO 01/42223 sind ebenfalls substituierte Biphenylanilide bekannt, die am Phenylring monosubstituiert sind.

Aus der JP 09/132567 sind disubstituierte Biphenylanilide bekannt, die am Phenylring durch Trifluormethyl substituiert sind.

Aus der WO 2005/123689 und der WO 2005/123690 sind 2,4-disubstituierte Biphenylanilide bekannt, und aus der älteren deutschen Anmeldung Nr. 102005007160.0 sind 3,4-disubstituierte Biphenylanilde bekannt.

Aus der WO 2005/034628 sind Mischungen aus 3,4-disubstituierten Biphenylaniliden mit anderen Fungiziden bekannt.

Die beschriebenen 3,4-disubstituierten Biphenylanilide können jedoch, insbesondere bei niedrigen Aufwandmengen, nicht in vollem Umfang zufrieden stellen.

Die voranstehend als Komponente 2 genannten Wirkstoffe II, ihre Herstellung und ihre Wirkung gegen Schadpilze sind allgemein bekannt (vgl.: http://www.hclrss.demon.co.uk/index.html); sie sind kommerziell erhältlich.
Benalaxyl, Methyl *N*-(phenylacetyl)-*N*-(2,6-xylyl)-DL-alaninat (DE 29 03 612);
Metalaxyl, Methyl *N*-(methoxyacetyl)-*N*-(2,6-xylyl)-DL-alaninat (GB 15 00 581);
Ofurace, (*RS*)-α-(2-Chlor-*N*-2,6-xylylacetamido)-γ-butyrolacton [CAS RN 58810-48-3]; Oxadixyl, *N*-(2,6-dimethylphenyl)-2-methoxy-*N*-(2-oxo-3-oxazolidinyl)acetamid (GB 20 58 059);
Aldimorph, "4-Alkyl-2,5(oder 2,6)-dimethylmorpholin", enthaltend 65-75% 2,6-Dimethylmorpholin und 25-35% 2,5-Dimethylmorpholin, enthaltend mehr als 85% 4-Dodecyl-2,5(oder 2,6)-Dimethylmorpholin, wobei "alkyl" auch Octyl, Decyl, Tetradecyl und Hexadecyl mit einem cis/trans Verhältnis von 1:1 einschließt [CAS RN 91315-15-0];
Dodine, 1-Dodecylguanidinium acetate (Plant Dis. Rep. 41, S.1029 (1957));
Dodemorph, 4-Cyclododecyl-2,6-dimethylmorpholin (DE-A 1198125);
Fenpropimorph, (*RS*)-*cis*-4-[3-(4-*tert*-Butylphenyl)-2-methylpropyl]-2,6-dimethylmorpholin (DE-A 27 52 096);

Fenpropidin, (*RS*)-1-[3-(4-*tert*-Butylphenyl)-2-methylpropyl]piperidin (DE-A 27 52 096);
Guazatine, Mischung der Reaktionsprodukte, erhalten aus der Amidierung von technischem Iminodi(octamethylene) diamin, enthaltend verschiedene Guanidine und Polyamine [CAS RN 108173-90-6];
Iminoctadin, 1,1'-Iminodi(octamethylene)diguanidine (Congr. Plant Pathol., 1., S. 27 (1968);
Spiroxamin, (8-Tert-butyl-1,4-dioxaspiro[4.5]dec-2-yl)diethylamin (EP-A 281 842);
Tridemorph, 2,6-Dimethyl-4-tridecylmorpholin (DE-A 11 64 152);
Pyrimethanil, 4,6-Dimethylpyrimidin-2-yl-phenylamin (DD-A 151 404);
Mepanipyrim, (4-Methyl-6-prop-1-inyl-pyrimidin-2-yl)-phenylamin (EP-A 224 339);
Cyprodinil, (4-Cyclopropyl-6-methylpyrimidin-2-yl)phenylamin (EP-A 310 550);
Cycloheximid, 4-{(2*R*)-2-[(1*S*,3*S*,5*S*)-3,5-Dimethyl-2-oxocyclohexyl]-2-hydroxyethyl}piperidin-2,6-dion [CAS RN 66-81-9];
Griseofulvin, 7-Chlor-2',4,6-trimethoxy-6'-methylspiro[benzofuran-2(3*H*),1'-cyclohex-2'-ene]-3,4'-dion [CAS RN 126-07-8];
Kasugamycin, 3-*O*-[2-Amino-4-[(carboxyiminomethyl)amino]-2,3,4,6-tetradeoxy-α-D-*arabino*-hexopyranosyl]-D-*chiro*-inositol [CAS RN 6980-18-3];
Natamycin, (8*E*,14*E*,16*E*,18*E*,20*E*)-(1*R*,3*S*,5*R*,7*R*,12*R*,22*R*,24*S*,25*R*,26*S*)-22-(3-Amino-3,6-dideoxy-β-D-mannopyranosyloxy)-1,3,26-trihydroxy-12-methyl-10-oxo-6,11,28-trioxatricyclo[22.3.1.$0^{5,7}$]octacosa-8,14,16,18,20-pentaene-25-carbonsäure [CAS RN 7681-93-8];
Polyoxin, 5-(2-Amino-5-*O*-carbamoyl-2-deoxy-L-xylonamido)-1-(5-carboxy-1,2,3,4-tetrahydro-2,4-dioxopyrimidin-1-yl)-1,5-dideoxy-β-D-allofuranuronsäure [CAS RN 22976-86-9];
Streptomycin, 1,1'-{1-L-(1,3,5/2,4,6)-4-[5-Deoxy-2-*O*-(2-deoxy-2-methylamino-α-L-glucopyranosyl)-3-*C*-formyl-α-L-lyxofuranosyloxy]-2,5,6-trihydroxycyclohex-1,3-ylene}diguanidin (J. Am. Chem. Soc. 69, S.1234 (1947));
Bitertanol, β-([1,1'-Biphenyl]-4-yloxy)-α-(1,1-dimethylethyl)-1*H*-1,2,4-thazole-1-ethanol (DE 23 24 020);
Bromuconazol, 1-[[4-Brom-2-(2,4-dichlorphenyl)tetrahydro-2-furanyl]methyl]-1*H*-1,2,4-triazol (Proc. 1990 Br. Crop. Prot. Conf. - Pests Dis., Bd. 1, S. 459);
Cyproconazol, 2-(4-Chlorphenyl)-3-cyclopropyl-1-[1,2,4]triazol-1-ylbutan-2-ol (US 4 664 696);
Difenoconazol, 1-{2-[2-Chlor-4-(4-chlorphenoxy)phenyl]-4-methyl-[1,3]dioxolan-2-ylmethyl}-1H-[1,2,4]triazol (GB-A 2 098 607);
Diniconazol, (β*E*)-β-[(2,4-Dichlorphenyl)methylen]-α-(1,1-dimethylethyl)-1*H*-1,2,4-triazol-1-ethanol (Noyaku Kagaku, 1983, Bd. 8, S. 575);
Enilconazol (Imazalil), 1-[2-(2,4-Dichlorphenyl)-2-(2-propenyloxy)ethyl]-1*H*-imidazol (Fruits 28, S. 545, 1973);
Epoxiconazol, (2*RS,*3*SR*)-1-[3-(2-Chlorphenyl)-2,3-epoxy-2-(4-fluorophenyl)propyl]-1*H*-1,2,4-triazol (EP-A 196 038);
Fenbuconazol, α-[2-(4-Chlorphenyl)ethyl]-α-phenyl-1*H*-1,2,4-triazolo-1-propannitril (Proc. 1988 Br. Crop Prot. Conf. - Pests Dis., Bd. 1, S. 33);
Fluquinconazol, 3-(2,4-Dichlorphenyl)-6-fluor-2-[1,2,4]-triazol-1-yl-3H-quinazolin-4-on (Proc. Br. Crop Prot. Conf.-Pests Dis., 5-3, 411 (1992));
Flusilazol, 1-{[Bis-(4-fluorophenyl)methylsilanyl]methyl}-1H-[1,2,4]triazol (Proc. Br. Crop Prot. Conf.-Pests Dis., Bd. 1, S. 413 (1984));
Flutriafol, α-(2-Fluorphenyl)-α-(4-fluorphenyl)-1*H*-1,2,4-triazol-1-ethanol (EP-A 15 756);
Hexaconazol, 2-(2,4-Dichlorphenyl)-1-[1,2,4]triazol-1-yl-hexan-2-ol (CAS RN 79983-71-4);
Ipconazol, 2-[(4-Chlorphenyl)methyl]-5-(1-methylethyl)-1-(1*H*-1,2,4-triazol-1-yl-methyl)cyclopentanol (EP-A 267 778),
Metconazol, 5-(4-Chlorbenzyl)-2,2-dimethyl-1-[1,2,4]triazol-1-ylmethylcyclopentanol (GB 857 383);
Myclobutanil, 2-(4-Chlorphenyl)-2-[1,2,4]triazol-1-ylmethyl-pentannitril (CAS RN 88671-89-0);
Penconazol, 1-[2-(2,4-Dichlorphenyl)pentyl]-1H-[1,2,4]triazol (Pesticide Manual, 12. Auflage 2000, S. 712);
Propiconazol, 1-[[2-(2,4-Dichlorphenyl)-4-propyl-1,3-dioxolan-2-yl]methyl]-1*H*-1,2,4-triazol (BE 835 579);
Prochloraz, Imidazol-1-carbonsäure-propyl-[2-(2,4,6-trichlorphenoxy)-ethyl]-amid (US 3 991 071);
Prothioconazol, 2-[2-(1-Chlorcyclopropyl)-3-(2-chlorphenyl)-2-hydroxypropyl]-2,4-dihydro-[1,2,4]triazol-3-thion (WO 96/16048);
Simeconazol, α-(4-Fluorophonyl)-α-[(trimethylsilyl)mothyl]-1*H*-1,2,4-triazol-1-ethanol [CAS RN 149508-90-7],
Tebuconazol, 1-(4-Chlorphenyl)-4,4-dimethyl-3-[1,2,4]triazol-1-ylmethyl-pentan-3-ol (EP-A 40 345);
Tetraconazol, 1-[2-(2,4-Dichlorphenyl)-3-(1,1,2,2-tetrafluorethoxy)propyl]-1*H*-1,2,4-triazol (EP-A 234 242);
Triadimefon, 1-(4-Chlorphenoxy)-3,3-dimethyl-1-(1*H*-1,2,4-triazol-1-yl)-2-butanon (BE 793 867);
Triadimenol, β-(4-Chlorphonoxy)-α-(1,1-dimethylethyl)-1*H*-1,2,4-triazol-1-ethanol (DE-A 23 24 010);
Triflumizol, (4-Chlor-2-trifluormethylphenyl)-(2-propoxy-1-[1,2,4]triazol-1-yl-ethyliden)-amin (JP-A 79/119 462);
Triticonazol, (5*E*)-5-[(4-Chlorphenyl)methylen]-2,2-dimethyl-1-(1*H*-1,2,4-triazol-1-ylmethyl)cyclopentanol (FR 26 41 277);
Iprodion, 3-(3,5-Dichlorphenyl)-2,4-dioxo-imidazolidin-1-carbonsäureisopropylamid (GB 13 12 536);
Myclozolin, (*RS*)-3-(3,5-Dichlorophenyl)-5-methoxymethyl-5-methyl-1,3-oxazolidin-2,4-dion [CAS RN 54864-61-8];

Procymidon, *N*-(3,5-Dichlorphenyl)-1,2-dimethylcyclopropan-1,2-dicarboximid (US 3 903 090);
Vinclozolin, 3-(3,5-Dichlorphenyl)-5-methyl-5-vinyl-oxazolidin-2,4-dion (DE-A 22 07 576);
Ferbam, Eisen(3+)dimethyldithiocarbamat (US 1 972 961);
Nabam, Dinatriumethylenbis(dithiocarbamat) (US 2 317 765);
Maneb, Mangan-ethylenbis(dithiocarbamat) (US 2 504 404);
Mancozeb, Mangan-ethylenbis(dithiocarbamat)-polymerkomplex-Zinksalz (GB 996 264);
Metam, Methyldithiocarbaminsäure (US 2 791 605);
Metiram, Zinkammoniat-ethylenbis(dithiocarbamat) (US 3 248 400);
Propineb, Zink Propylenbis(dithiocarbamat) Polymer (BE 611 960);
Polycarbamat, Bis(dimethylcarbamodithioato-κ*S*,κ*S'*)[μ-[[1,2-ethanediylbis[carbamodithioato-κ*S*,κ*S*]](2-)]]di[zinc] [CAS RN 64440-88-6];
Thiram, Bis(dimethylthiocarbamoyl)disulfid (DE-A 642 532);
Ziram, Dimethyldithiocarbamat [CAS RN 137-30-4];
Zineb, Zink-ethylenbis(dithiocarbamat) (US 2 457 674);
Anilazin, 4,6-Dichlor-*N*-(2-chlorphenyl)-1,3,5-triazin-2-amin (US 2 720 480);
Benomyl, 2-Acetylaminobenzimidazol-1-carbonsäurebutylamid (US 3 631 176);
Boscalid, 2-chloro-*N*-(4'-chlorobiphenyl-2-yl)nicotinamide (EP-A 545 099);
Carbendazim, (1H-Benzimidazol-2-yl)-carbaminsäuremethylester (US 3 657 443);
Carboxin, 5,6-Dihydro-2-methyl-*N*-phenyl-1,4-oxathiin-3-carboxamide (US 3 249 499);
Oxycarboxin, 5,6-Dihydro-2-methyl-1,4-oxathiin-3-carboxanilid 4,4-dioxid (US 3 399 214);
Cyazofamid, 4-chloro-2-cyano-*N*,*N*-dimethyl-5-(4-methylphenyl)-1*H*-imidazole-1-sulfonamid (CAS RN 120116-88-3];
Dazomet, 3,5-dimethyl-1,3,5-thiadiazinane-2-thione (Bull. Soc. Chim. Fr. Vol. 15, p. 891 (1897));
Diflufenzopyr, 2-{1-[4-(3,5-difluorophenyl)semicarbazono]ethyl}nicotinic acid [CAS RN 109293-97-2];
Dithianon, 5,10-Dioxo-5,10-dihydronaphtho[2,3-b][1,4]dithiin-2,3-dicarbonitril (GB 857 383);
Famoxadon, (*RS*)-3-Anilino-5-methyl-5-(4-phenoxyphenyl)-1,3-oxazolidin-2,4-dion [CAS RN 131807-57-3];
Fenamidon, (5)-1-Anilino-4-mothyl-2-mothylthio-4-phonylimidazolin-5-on [CAS RN 161326-34-7];
Fenarimol, α-(2-Chlorphenyl)-α-(4-chlorphenyl)-5-pyrimidinemethanol (GB 12 18 623);
Fuberidazole, 2-(2-Furanyl)-1*H*-benzimidazol (DE-A 12 09 799);
Flutolanil, α,α,α-Trifluor-3'-isopropoxy-*o*-toluanilid (JP 1104514);
Furametpyr, 5-Chlor-*N*-(1,3-dihydro-1,1,3-trimethyl-4-isobenzofuranyl)-1,3-dimethyl-1*H*-pyrazol-4-carboxamid [CAS RN 123572-88-3];
Isoprothiolan, diisopropyl 1,3-dithiolan-2-ylidenemalonat (Proc. Insectic. Fungic. Conf. 8. Bd. 2, S. 715 (1975));
Mepronil, 3'-Isopropoxy-*o*-toluanilid (US 3 937 840);
Nuarimol, a-(2-Chlorphenyl)-α-(4-fluorphenyl)-5-pyrimidinemethanol (GB 12 18 623);
Fluopicolid (Picobenzamid), 2,6-Dichlor-N-(3-chlor-5-trifluormethyl-pyridin-2-ylmethyl)-benzamid (WO 99/42447);
Probenazol, 3-Allyloxy-1,2-benzothiazol 1,1-dioxid (Agric. Biol. Chem. 37, S. 737 (1973);
Proquinazid, 6-Iod-2-propoxy-3-propylquinazolin-4(3*H*)-on (WO 97/48684);
Pyrifenox, 2',4'-Dichlor-2-(3-pyridyl)acetophenon (*EZ*)-*O*-methyloxim (EP 49 854);
Pyroquilon, 1,2,5,6-tetrahydropyrrolo[3,2,1-*ij*]quinolin-4-on (GB 139 43 373) Quinoxyfen, 5,7-dichlor-4-(4-fluorphenoxy) quinolin (US 5 240 940);
Silthiofam, *N*-Allyl-4,5-dimethyl-2-(trimethylsilyl)thiophen-3-carboxamid [CAS RN 175217-20-6];
Thiabendazol, 2-(1,3-thiazol-4-yl)benzimidazol (US 3 017 415);
Thifluzamid, 2',6'-Dibrom-2-methyl-4'-trifluormethoxy-4-trifluormethyl-1,3-thiazol-5-carboxanilid [CAS RN 130000-40-7];
Thiophanat-methyl, 1,2-Phenylenbis(iminocarbonothioyl)bis(dimethylcarbamat) (DE-A 19 30 540);
Tiadinil, 3'-Chlor-4,4'-dimethyl-1,2,3-thiadiazol-5-carboxanilid [CAS RN 223580-51-6];
Tricyclazole, 5-methyl-1,2,4-triazolo[3,4-*b*][1,3]benzothiazole [CAS RN 41814-78-2];
Triforine, *N,N*-{piperazine-1,4-diylbis[(trichlormethyl)methylene]}diformamide (DE-A 19 01 421);
5-Chlor-7-(4-methyl-piperidin-1-yl)-6-(2,4,6-trifluoro-phenyl)-[1,2,4]thazolo[1,5-a]pyrimidin (WO 98/46607);
Bordeauxbrühe, Mischung aus $CuSO_4$ x $3Cu(OH)_2$ x $3CaSO_4$ [CAS RN 8011-63-0] Kupferacetat, $Cu(OCOCH_3)_2$ [CAS RN 8011-63-0];
Kupferoxychlorid, $Cu_2Cl(OH)_3$ [CAS RN 1332-40-7];
Basisches Kupfersulfat, $CuSO_4$ [CAS RN 1344-73-6];
Binapacryl, (*RS*)-2-*sec*-Butyl-4,6-dinitrophenyl 3-methylcrotonat [CAS RN 485-31-4];
Dinocap, Mischung aus 2,6-Dinitro-4-octylphenylcrotonat und 2,4-Dinitro-6-octyl-phenylcrotonat, wobei "octyl" eine Mischung aus 1-Methylheptyl, 1-Ethylhexyl und 1-Propylpentyl ist (US 2 526 660);
Dinobuton, (*RS*)-2-*sec*-Butyl-4,6-dinitrophenyl isopropyl carbonat [CAS RN 973-21-7];
Nitrothal-isopropyl, diisopropyl 5-nitroisophthalat (Proc. Br. Insectic. Fungic. Conf. 7., Bd. 2, S. 673 (1973));

Fenpiclonil, 4-(2,3-Dichlorphenyl)-1 H-pyrrol-3-carbonitril (Proc. 1988 Br. Crop Prot. Conf. - Pests Dis., Bd. 1, S. 65);
Fludioxonil, 4-(2,2-Difluorbenzo[1,3]dioxol-4-yl)-1 H-pyrrol-3-carbonitril (The Pesticide Manual, Hrsg.: The British Crop Protection Council, 10. Auflage 1995, S. 482);
Acibenzolar-S-methyl, Methyl 1,2,3-benzothiadiazol-7-carbothioat [CAS RN 135158-54-2];
Flubenthiavalicarb (Benthiavalicarb), {(S)-1-[(1R)-1-(6-Fluorbenzothiazol-2-yl)-ethylcarbamoyl]-2-methylpropyl}-carbaminsäureisopropylester (JP-A 09/323 984);
Carpropamid, 2,2-Dichlor-*N*-[1-(4-chlorphenyl)ethyl]-1-ethyl-3-methylcyclopropan-carboxamid [CAS RN 104030-54-8];
Chlorthalonil, 2,4,5,6-Tetrachlorisophthalonitril (US 3 290 353);
Cyflufenamid, (*Z*)-*N*-[α-(Cyclopropylmethoxyimino)-2,3-difluor-6-(trifluormethyl)benzyl]-2-phenylacetamid (WO 96/19442);
Cymoxanil, 1-(2-Cyano-2-methoxyiminoacetyl)-3-ethylharnstoff (US 3 957 847);
Diclomezine, 6-(3,5-Dichlorophenyl-*p*-tolyl)pyridazin-3(2*H*)-on (US 4 052 395);
Diclocymet, (*RS*)-2-Cyano-*N*-[(*R*)-1-(2,4-dichlorphenyl)ethyl]-3,3-dimethylbutyramid [CAS RN 139920-32-4];
Diethofencarb, Isopropyl 3,4-diethoxycarbanilat (EP-A 78 663);
Edifenphos, *O*-Ethyl *S*,*S*-diphenyl phosphorodithioat (DE-A 14 93 736);
Ethaboxam, *N*-(Cyano-2-thienylmethyl)-4-ethyl-2-(ethylamino)-5-thiazolcarboxamid (EP-A 639 574);
Fenhexamid, N-(2,3-dichlor-4-hydroxyphenyl)-1-methylcyclohexancarboxamid (Proc. Br. Crop Prot. Conf. - Pests Dis., 1998, Bd. 2, S. 327);
Fentin acetat, Triphenylzinn (US 3 499 086);
Fenoxanil, *N*-(1-Cyano-1,2-dimethylpropyl)-2-(2,4-dichlorphenoxy)propanamid (EP-A 262 393);
Ferimzone, (*Z*)-2'-Methylacetophenon-4,6-dimethylpyrimidin-2-ylhydrazon [CAS RN 89269-64-7];
Fluazinam, 3-Chlor-N-[3-chlor-2,6-dinitro-4-(trifluormethyl)phenyl]-5-(trifluormethyl)-2-pyridinamin (The Pesticide Manual, Hrsg.: The British Crop Protection Council, 10. Auflage 1995, S. 474);
Fosetyl, Fosetyl-Aluminum, ethylphosphonat (FR 22 54 276);
Iprovalicarb, [(1S)-2-Methyl-1-(1-p-tolyl-ethylcarbamoyl)-propyl]carbaminsäure-isopropylester (EP-A 472 996);
Hexachlorbenzol (C. R. Seances Acad. Agric. Fr., Vol. 31, S. 24 (1945);
Mandipropamid, (*RS*)-2-(4-Chlorphenyl)-*N*-[3-methoxy-4-(prop-2-ynyloxy)phenethyl]-2-(prop-2-ynyloxy)acetamid (WO 03/042166);
Metrafenon, 3'-Brom-2,3,4,6'-tetramethoxy-2',6-dimethylbenzophenon (US 5 945 567);
Pencycuron, 1-(4-Chlorbenzyl)-1-cyclopentyl-3-phenylharnstoff (DE-A 27 32 257);
Penthiopyrad, (*RS*)-*N*-[2-(1,3-Dimethylbutyl)-3-thienyl]-1-methyl-3-(trifluormethyl)-1*H*-pyrazol-4-carboxamid (JP 10/130268);
Propamocarb, 3-(Dimethylamino)propylcarbaminsäureisopropylester (DE-A 15 67 169); Phthalid (DE-A 16 43 347);
Toloclofos-methyl, *O*-2,6-Dichlor-*p*-tolyl *O,O*-dimethyl phosphorothioat (GB 14 67 561); Quintozen, Pentachlornitrobenzol (DE-A 682 048);
Zoxamid, (*RS*)-3,5-Dichlor-*N*-(3-chlor-1-ethyl-1-methyl-2-oxopropyl)-*p*-toluamid [CAS RN 156052-68-5];
Captafol, *N*-(1,1,2,2-Tetrachlorethylthio)cyclohex-4-en-1,2-dicarboximid (Phytopathology 52, S. 754 (1962));
Captan, N-(Trichlormethylthio)cyclohex-4-en-1,2-dicarboximid (US 2 553 770);
Dichlofluanid, N-Dichlorfluormethylthio-*N,N*-dimethyl-*N*-phenylsulfamid (DE-A 11 93 498);
Folpet, *N*-(Trichlormethylthio)phthalimid (US 2 553 770);
Tolylfluanid, *N*-Dichlorfluormethylthio-*N,N*-dimethyl-*N*-*p*-tolylsulfamid (DE-A 11 93 498);
Dimethomorph, 3-(4-Chlorphenyl)-3-(3,4-dimethoxyphenyl)-1-morpholin-4-yl-propenon (EP-A 120 321);
Flumetover, 2-(3,4-Dimethoxyphenyl)-*N*-ethyl-α,α,α-trifluor-*N*-methyl-*p*-toluamid [AGROW Nr. 243, 22 (1995)];
Flumorph, 3-(4-Fluorphenyl)-3-(3,4-dimethoxyphenyl)-1-morpholin-4-yl-propenon (EP-A 860 438);
4-Difluormethyl-2-methyl-thiazol-5-carbonsäure-(4'-brom-biphenyl-2-yl)-amid,
4-Difluormethyl-2-methyl-thiazol-5-carbonsäure-(4'-trifluormethyl-biphenyl-2-yl)-amid,
4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid (WO 03/66610),
3,4-Dichlor-isothiazol-5-carbonsäure (2-cyano-phenyl) amid (WO 99/24413);
N-(2-(4-[3-(4-Chlor-phenyl)-prop-2-ynyloxy]-3-methoxy-phenyl)-ethyl)-2-methansulfonylamino-3-methyl-butyramid,
N-(2-(4-[3-(4-Chlor-phenyl)-prop-2-ynyloxy]-3-methoxy-phenyl)-ethyl)-2-ethanesulfonylamino-3-methyl-butyramid (WO 04/49804);
3-[5-(4-Chlor-phenyl)-2,3-dimethyl-isoxazolidin-3-yl]-pyridin (EP-A 10 35 122);
2-Butoxy-6-iodo-3-propyl-chromen-4-on (WO 03/14103); 3-(3-Brom-6-fluor-2-methyl-indol-1-sulfonyl)-[1,2,4]triazol-1-sulfonsäure dimethylamid (EP-A 10 31 571);
(2-Chlor-5-[1-(3-methyl-benzyloxyimino)-ethyl]-benzyl)-carbaminsäuremethylester,
(2-Chlor-5-[1-(6-methyl-pyridin-2-ylmethoxyimino)-ethyl]-benzyl)-carbaminsäuremethylester (EP-A 12 01 648);
3-(4-Chlor-phenyl)-3-(2-isopropoxy-carbonylamino-3-methyl-butyrylamino)-propionsäure-methylester (EP-A 10 28

125);
Azoxystrobin, 2-{2-[6-(2-Cyano-1-vinyl-penta-1,3-dienyloxy)-pyrimidin-4-yloxy]-phenyl}-3-methoxy-acrylsäuremethylester (EP-A 382 375),
Dimoxystrobin, (E)-2-(methoxyimino)-N-methyl-2-[α-(2,5-xylyloxy)-o-tolyl]acetamid (EP-A 477 631);
Fluoxastrobin, (E)-{2-[6-(2-chlorphenoxy)-5-fluorpyrimidin-4-yloxy]phenyl}(5,6-dihydro-1,4,2-dioxazin-3-yl)methanon-O-methyloxim (WO 97/27189);
Kresoxim-methyl, (E)-Methoxyimino[α-(o-tolyloxy)-o-tolyl]essigsäuremethylester (EP-A 253 213);
Metominostrobin, (E)-2-(Methoxyimino)-N-methyl-2-(2-phenoxyphenyl)acetamid (EP-A 398 692);
Orysastrobin, (2E)-2-(Methoxyimino)-2-{2-[(3E,5E,6E)-5-(methoxyimino)-4,6-dimethyl-2,8-dioxa-3,7-diazanona-3,6-dien-1-yl]phenyl}-N-methylacetamid (WO 97/15552);
Picoxystrobin, 3-Methoxy-2-[2-(6-trifluormethyl-pyridin-2-yloxymethyl)-phenyl]-acrylsäuremethylester (EP-A 278 595);
Pyraclostrobin, N-{2-[1-(4-Chlorphenyl)-1H-pyrazol-3-yloxymethyl]phenyl}(N-methoxy)carbaminsäuremethylester (WO 96/01256);
Trifloxystrobin, (E)-Methoxyimino-{(E)-α-[1-(α,α,α-trifluor-m-tolyl)ethylidenaminooxy]-o-tolyl}essigsäuremethylester (EP-A 460 575);
2-[ortho-(2,5-Dimethylphenyl-oxymethylen)phenyl]-3-methoxy-acrylsäuremethylester (EP-A 226 917);
5-Chlor-7-(4-methyl-piperidin-1-yl)-6-(2,4,6-trifluor-phenyl)-[1,2,4]triazolo[1,5-a]pyrimidin (WO 98/46608);
3,4-Dichlor-N-(2-cyanophenyl)-isothiazol-5-carbonsäureamid (WO 99/24413);
Verbindungen der Formel III (WO 04/049804); N-(2-(4-[3-(4-Chlor-phenyl)-prop-2-ynyloxy]-3-methoxy-phenyl)-ethyl)-2-methanesulfonylamino-3-methyl-butyramid und N-(2-(4-[3-(4-Chlor-phenyl)-prop-2-ynyloxy]-3-methoxy-phenyl)-ethyl)-2-ethanesulfonylamino-3-methyl-butyramid (WO 03/66609);
2-Butoxy-6-iodo-3-propyl-chromen-4-on (WO 03/14103);
3-(3-Brom-6-fluor-2-methyl-indol-1-sulfonyl)-[1,2,4]triazol-1-sulfonsäuredimethylamid (WO 03/053145);
3-(4-Chlor-phenyl)-3-(2-isopropoxycarbonylamino-3-methyl-butyrylamino)-propansäuremethylester (EP-A 1028125).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilze aufweisen. Demgemäss wurde die eingangs definierten Mischungen der Wirkstoffe I und II gefunden. Es wurde außerdem gefunden, dass sich bei gleichzeitiger, und zwar gemeinsamer oder getrennter Anwendung mindestens einer Verbindung I und von mindestens einem der Wirkstoffe II, oder mindestens einer Verbindung I und mindestens einem der Wirkstoffe II nacheinander, Schadpilze besser bekämpfen lassen als mit den Einzelverbindungen allein (synergistische Mischungen).

Die Verbindungen I lassen sich als Synergisten für eine Vielzahl verschiedener fungizider Wirkstoffe verwenden. Durch gleichzeitige gemeinsame oder getrennte Anwendung mindestens einer Verbindung I mit mindestens einem Wirkstoff II wird die fungizide Wirksamkeit in überadditivem Maße erhöht.

Die 3,4-disubstituierte Biphenylanilide der Formel I sind aus der älteren deutschen Anmeldung Nr. 102005007160.0 und der WO 2005/034628 bekannt oder auf die dort beschriebene Weise herstellbar.
Die Verbindungen I, bei denen X für Schwefel steht, sind beispielsweise durch Schwefelung der entsprechenden Verbindungen I, bei denen X für Sauerstoff steht, herstellbar (vgl. z.B. D. Petrova & K. Jakobcic, Croat. Chem. Acta 48, 49 (1976) sowie die WO 2001/42223).

Unter den 3,4-disubstituierten Biphenylaniliden I sind einerseits diejenigen bevorzugt, bei denen X Sauerstoff bedeutet.

Andererseits sind diejenigen Verbindungen I bevorzugt, bei denen X für Schwefel steht.

Für die erfindungsgemäßen Mischungen sind Verbindungen der Formel I bevorzugt, bei denen $R^1$ und $R^2$ unabhängig voneinander Fluor, Chlor, Methyl, Methoxy oder Trifluormethyl bedeuten.

Besonders bevorzugt sind Verbindungen der Formel I, bei denen $R^1$ und $R^2$ unabhängig voneinander Fluor, Chlor, Cyano oder Methoxy bedeuten.
Ganz besonders bevorzugt sind Verbindungen der Formel I bei denen $R^1$ und $R^2$ unabhängig voneinander für Fluor oder Chlor stehen.

Besonders bevorzugt sind die in der folgenden Tabelle 1 aufgelisteten Verbindungen I, bei denen X für Sauerstoff steht.

Tabelle 1

| Nummer | $R^1$ | $R^2$ | $R^3$ |
|---|---|---|---|
| 1 | Fluor | Fluor | Difluormethyl |
| 2 | Fluor | Chlor | Difluormethyl |
| 3 | Fluor | Methyl | Difluormethyl |

(fortgesetzt)

| Nummer | $R^1$ | $R^2$ | $R^3$ |
|---|---|---|---|
| 4 | Fluor | Cyano | Difluormethyl |
| 5 | Fluor | Nitro | Difluormethyl |
| 6 | Fluor | Methoxy | Difluormethyl |
| 7 | Fluor | Trifluormethyl | Difluormethyl |
| 8 | Chlor | Fluor | Difluormethyl |
| 9 | Chlor | Chlor | Difluormethyl |
| 10 | Chlor | Methyl | Difluormethyl |
| 11 | Chlor | Cyano | Difluormethyl |
| 12 | Chlor | Nitro | Difluormethyl |
| 13 | Chlor | Methoxy | Difluormethyl |
| 14 | Chlor | Trifluormethyl | Difluormethyl |
| 15 | Methyl | Fluor | Difluormethyl |
| 16 | Methyl | Chlor | Difluormethyl |
| 17 | Methyl | Methyl | Difluormethyl |
| 18 | Methyl | Cyano | Difluormethyl |
| 19 | Methyl | Nitro | Difluormethyl |
| 20 | Methyl | Methoxy | Difluormethyl |
| 21 | Methyl | Trifluormethyl | Difluormethyl |
| 22 | Cyano | Fluor | Difluormethyl |
| 23 | Cyano | Chlor | Difluormethyl |
| 24 | Cyano | Methyl | Difluormethyl |
| 25 | Cyano | Cyano | Difluormethyl |
| 26 | Cyano | Nitro | Difluormethyl |
| 27 | Cyano | Methoxy | Difluormethyl |
| 28 | Cyano | Trifluormethyl | Difluormethyl |
| 29 | Nitro | Fluor | Difluormethyl |
| 30 | Nitro | Chlor | Difluormethyl |
| 31 | Nitro | Methyl | Difluormethyl |
| 32 | Nitro | Cyano | Difluormethyl |
| 33 | Nitro | Nitro | Difluormethyl |
| 34 | Nitro | Methoxy | Difluormethyl |
| 35 | Nitro | Trifluormethyl | Difluormethyl |
| 36 | Methoxy | Fluor | Difluormethyl |
| 37 | Methoxy | Chlor | Difluormethyl |
| 38 | Methoxy | Methyl | Difluormethyl |
| 39 | Methoxy | Cyano | Difluormethyl |
| 40 | Methoxy | Nitro | Difluormethyl |
| 41 | Methoxy | Methoxy | Difluormethyl |

(fortgesetzt)

| Nummer | $R^1$ | $R^2$ | $R^3$ |
|---|---|---|---|
| 42 | Methoxy | Trifluormethyl | Difluormethyl |
| 43 | Trifluormethyl | Fluor | Difluormethyl |
| 44 | Trifluormethyl | Chlor | Difluormethyl |
| 45 | Trifluormethyl | Methyl | Difluormethyl |
| 46 | Trifluormethyl | Cyano | Difluormethyl |
| 47 | Trifluormethyl | Nitro | Difluormethyl |
| 48 | Trifluormethyl | Methoxy | Difluormethyl |
| 49 | Trifluormethyl | Trifluormethyl | Difluormethyl |
| 50 | Fluor | Fluor | Trifluormethyl |
| 51 | Fluor | Chlor | Trifluormethyl |
| 52 | Fluor | Methyl | Trifluormethyl |
| 53 | Fluor | Cyano | Trifluormethyl |
| 54 | Fluor | Nitro | Trifluormethyl |
| 55 | Fluor | Methoxy | Trifluormethyl |
| 56 | Fluor | Trifluormethyl | Trifluormethyl |
| 57 | Chlor | Fluor | Trifluormethyl |
| 58 | Chlor | Chlor | Trifluormethyl |
| 59 | Chlor | Methyl | Trifluormethyl |
| 60 | Chlor | Cyano | Trifluormethyl |
| 61 | Chlor | Nitro | Trifluormethyl |
| 62 | Chlor | Methoxy | Trifluormethyl |
| 63 | Chlor | Trifluormethyl | Trifluormethyl |
| 64 | Methyl | Fluor | Trifluormethyl |
| 65 | Methyl | Chlor | Trifluormethyl |
| 66 | Methyl | Methyl | Trifluormethyl |
| 67 | Methyl | Cyano | Trifluormethyl |
| 68 | Methyl | Nitro | Trifluormethyl |
| 69 | Methyl | Methoxy | Trifluormethyl |
| 70 | Methyl | Trifluormethyl | Trifluormethyl |
| 71 | Cyano | Fluor | Trifluormethyl |
| 72 | Cyano | Chlor | Trifluormethyl |
| 73 | Cyano | Methyl | Trifluormethyl |
| 74 | Cyano | Cyano | Trifluormethyl |
| 75 | Cyano | Nitro | Trifluormethyl |
| 76 | Cyano | Methoxy | Trifluormethyl |
| 77 | Cyano | Trifluormethyl | Trifluormethyl |
| 78 | Nitro | Fluor | Trifluormethyl |
| 79 | Nitro | Chlor | Trifluormethyl |

(fortgesetzt)

| Nummer | $R^1$ | $R^2$ | $R^3$ |
|---|---|---|---|
| 80 | Nitro | Methyl | Trifluormethyl |
| 81 | Nitro | Cyano | Trifluormethyl |
| 82 | Nitro | Nitro | Trifluormethyl |
| 83 | Nitro | Methoxy | Trifluormethyl |
| 84 | Nitro | Trifluormethsl | Trifluormethyl |
| 85 | Methoxy | Fluor | Trifluormethyl |
| 86 | Methoxy | Chlor | Trifluormethyl |
| 87 | Methoxy | Methyl | Trifluormethyl |
| 88 | Methoxy | Cyano | Trifluormethyl |
| 89 | Methoxy | Nitro | Trifluormethyl |
| 90 | Methoxy | Methoxy | Trifluormethyl |
| 91 | Methoxy | Trifluormethsl | Trifluormethyl |
| 92 | Trifluormethyl | Fluor | Trifluormethyl |
| 93 | Trifluormethyl | Chlor | Trifluormethyl |
| 94 | Trifluormethyl | Methyl | Trifluormethyl |
| 95 | Trifluormethyl | Cyano | Trifluormethyl |
| 96 | Trifluormethyl | Nitro | Trifluormethyl |
| 97 | Trifluormethyl | Methoxy | Trifluormethyl |
| 98 | Trifluormethyl | Trifluormethsl | Trifluormethyl |

Ganz besonders bevorzugte Verbindungen der Formel I sind 1-Methyl-3-trifluormethyl-1 H-pyrazol-4-carbonsäure (3',4'-dichlorbiphenyl-2-yl)-amid, 1-Methyl-3-trifluormethyl-1 H-pyrazol-4-carbonsäure (3'-chlor-4'-fluorbiphenyl-2-yl)-amid, 1-Methyl-3-trifluormethyl-1 H-pyrazol-4-carbonsäure (3',4'-difluorbiphenyl-2-yl)-amid, 1-Methyl-3-trifluormethyl-1 H-pyrazol-4-carbonsäure (3'-fluor-4'-chlorbiphenyl-2-yl)-amid, 1-Methyl-3-difluormethyl-1 H-pyrazol-4-carbonsäure (3'-chlor-4'-fluorbiphenyl-2-yl)-amid, 1-Methyl-3-difluormethyl-1 H-pyrazol-4-carbonsäure (3',4'-difluorbiphenyl-2-yl)-amid, 1-Methyl-3-difluormethyl-1 H-pyrazol-4-carbonsäure (3',4'-dichlorbiphenyl-2-yl)-amid, 1-Methyl-3-difluormethyl-1 H-pyrazol-4-carbonsäure (3'-fluor-4'-chlorbiphenyl-2-yl)-amid.

Bevorzugt sind Mischungen einer Verbindung der Formel I mit mindestens einem Wirkstoff ausgewählt aus der Gruppe der A) Azole.

Bevorzugt sind auch Mischungen einer Verbindung der Formel I mit mindestens einem Wirkstoff ausgewählt aus der Gruppe der B) Strobilurine.

Bevorzugt sind Mischungen einer Verbindung der Formel I mit mindestens einem Wirkstoff ausgewählt aus der Gruppe der C) Carbonsäureamide.

Weiterhin bevorzugt sind auch Mischungen einer Verbindung der Formel I mit mindestens einem Wirkstoff ausgewählt aus der Gruppe der D) Heterocyclischen Verbindungen.

Weiterhin bevorzugt sind auch Mischungen einer Verbindung der Formel I mit mindestens einem Wirkstoff ausgewählt aus der Gruppe der E) Carbamate.

Weiterhin bevorzugt sind auch Mischungen einer Verbindung der Formel I mit mindestens einem Wirkstoff ausgewählt aus der Gruppe der F) Sonstigen Fungizide. Weiterhin bevorzugt sind auch Mischungen einer Verbindung der Formel I mit mindestens einem Wirkstoff, ausgewählt aus der Gruppe der A) Azole, ausgewählt aus Cyproconazol, Difenoconazol, Epoxiconazol, Fluquinconazol, Flusilazol, Flutriafol, Metconazol, Myclobutanil, Penconazol, Propiconazol, Prothioconazol, Triadimefon, Triadimenol, Tebuconazol, Tetraconazol, Triticonazol, Prochloraz, Cyazofamid, Benomyl, Carbendazim, Ethaboxam.

Besonders bevorzugt sind auch Mischungen einer Verbindung der Formel I mit mindestens einem Wirkstoff, ausgewählt aus der Gruppe der A) Azole, ausgewählt aus Cyproconazol, Difenoconazol, Epoxiconazol, Fluquinconazol, Flusilazol, Flutriafol, Metconazol, Myclobutanil, Propiconazol, Prothioconazol, Triadimefon, Triadimenol, Tebuconazol,

Tetraconazol, Triticonazol, Prochloraz, Cyazofamid, Benomyl und Carbendazim.

Ganz besonders bevorzugt sind auch Mischungen einer Verbindung der Formel I mit mindestens einem Wirkstoff, ausgewählt aus der Gruppe der A) Azole, ausgewählt aus Epoxiconazol, Fluquinconazol, Flutriafol, Metconazol, Tebuconazol, Triticonazol, Prochloraz und Carbendazim.

Bevorzugt sind auch Mischungen einer Verbindung der Formel I mit mindestens einem Wirkstoff, ausgewählt aus der Gruppe der B) Strobilurine, ausgewählt aus Azoxystrobin, Dimoxystrobin, Fluoxastrobin, Kresoxim-methyl, Orysastrobin, Picoxystrobin, Pyraclostrobin und Trifloxystrobin.

Besonders bevorzugt sind auch Mischungen einer Verbindung der Formel I mit mindestens einem Wirkstoff, ausgewählt aus der Gruppe der B) Strobilurine, ausgewählt aus Kresoxim-methyl, Orysastrobin und Pyraclostrobin.

Ganz besonders bevorzugt sind auch Mischungen einer Verbindung der Formel I mit Pyraclostrobin.

Bevorzugt sind auch Mischungen einer Verbindung der Formel I mit mindestens einem Wirkstoff, ausgewählt aus der Gruppe der C) Carbonsäureamide, ausgewählt aus Fenhexamid, Metalaxyl, Mefenoxam, Ofurace, Dimethomorph, Flumorph, Fluopicolid (Picobenzamid), Zoxamid, Carpropamid und Mandipropamid.

Besonders bevorzugt sind auch Mischungen einer Verbindung der Formel I mit mindestens einem Wirkstoff, ausgewählt aus der Gruppe der C) Carbonsäureamide, ausgewählt aus Fenhexamid, Metalaxyl, Mefenoxam, Ofurace, Dimethomorph, Zoxamid und Carpropamid.

Bevorzugt sind auch Mischungen einer Verbindung der Formel I mit mindestens einem Wirkstoff, ausgewählt aus der Gruppe der D) Heterocylischen Verbindungen, ausgewählt aus Fluazinam, Cyprodinil, Fenarimol, Mepanipyrim, Pyrimethanil, Triforin, Fludioxonil, Dodemorph, Fenpropimorph, Tridemorph, Fenpropidin, Iprodion, Vinclozolin, Famoxadon, Fenamidon, Probenazol, 5-Chlor-7-(4-methyl-piperidin-1-yl)-6-(2,4,6-trifluor-phenyl)-[1,2,4]triazolo[1,5-a]pyrimidin, Proquinazid, Acibenzolar-S-methyl, Captafol, Folpet, Fenoxanil und Quinoxyfen.

Besonders bevorzugt sind auch Mischungen einer Verbindung der Formel I mit mindestens einem Wirkstoff, ausgewählt aus der Gruppe der D) Heterocyclischen Verbindungen, ausgewählt aus Pyrimethanil, Dodemorph, Fenpropimorph, Tridemorph, Iprodion, Vinclozolin, 5-Chlor-7-(4-methyl-piperidin-1-yl)-6-(2,4,6-trifluor-phenyl)-[1,2,4]triazolo[1,5-a]pyrimidin und Quinoxyfen.

Bevorzugt sind auch Mischungen einer Verbindung der Formel I mit mindestens einem Wirkstoff, ausgewählt aus der Gruppe der E) Carbamate, ausgewählt aus Mancozeb, Metiram, Propineb, Thiram, Iprovalicarb, Flubenthiavalicarb und Propamocarb.

Besonders bevorzugt sind auch Mischungen einer Verbindung der Formel I mit mindestens einem Wirkstoff, ausgewählt aus der Gruppe der E) Carbamate, ausgewählt aus Mancozeb und Metiram.

Bevorzugt sind auch Mischungen einer Verbindung der Formel I mit mindestens einem Wirkstoff, ausgewählt aus der Gruppe der F) Sonstigen Fungizide, ausgewählt aus Dithianon, Fentin-Salzen wie Fentin-acetat, Fosetyl, Fosetyl-Aluminium, Phosphoriger Säure und deren Salzen, Chlorothalonil, Dichlofluanid, Thiophanat-Methyl, Kupferacetat, Kupferhydroxid, Kupferoxychlorid, basisches Kupfersulfat, Schwefel, Cymoxanil, Metrafenon und Spiroxamin.

Besonders bevorzugt sind auch Mischungen einer Verbindung der Formel I mit mindestens einem Wirkstoff, ausgewählt aus der Gruppe der F) Sonstigen Fungizide, ausgewählt aus Phosphoriger Säure und deren Salzen, Chlorothalonil und Metrafenon.

Bevorzugt sind auch Dreiermischungen einer Verbindung der Formel I mit zwei der obengenannten Wirkstoffe II.

Bevorzugte Wirkstoffkombinationen sind in den folgenden Tabellen 2 bis 7 aufgeführt:

Tabelle 2

| Wirkstoffkombinationen von Verbindungen der Formel I mit Wirkstoffen II der Gruppe A): | | |
|---|---|---|
| Mischung | Verbindungen der Formel I | Wirkstoff II |
| 2.1 | 1-Methyl-3-trifluormethyl-1H-pyrazol-4-carbonsäure (3',4'-dichlorbiphenyl-2-yl)-amid | Epoxiconazol |
| 2.2 | 1-Methyl-3-trifluormethyl-1H-pyrazol-4-carbonsäure (3'-chlor-4'-fluorbiphenyl-2-yl)-amid | Epoxiconazol |
| 2.3 | 1-Methyl-3-trifluormethyl-1H-pyrazol-4-carbonsäure (3',4'-difluorbiphenyl-2-yl)-amid | Epoxiconazol |
| 2.4 | 1-Methyl-3-trifluormethyl-1H-pyrazol-4-carbonsäure (3'-fluor-4'-chlorbiphenyl-2-yl)-amid | Epoxiconazol |
| 2.5 | 1-Methyl-3-difluormethyl-1H-pyrazol-4-carbonsäure (3'-chlor-4'-fluorbiphenyl-2-yl)-amid | Epoxiconazol |

(fortgesetzt)

| Wirkstoffkombinationen von Verbindungen der Formel I mit Wirkstoffen II der Gruppe A): | | |
|---|---|---|
| Mischung | Verbindungen der Formel I | Wirkstoff II |
| 2.6 | 1-Methyl-3-difluormethyl-1H-pyrazol-4-carbonsäure (3',4'-difluorbiphenyl-2-yl)-amid | Epoxiconazol |
| 2.7 | 1-Methyl-3-difluormethyl-1H-pyrazol-4-carbonsäure (3',4'-dichlorbiphenyl-2-yl)-amid | Epoxiconazol |
| 2.8 | 1-Methyl-3-difluormethyl-1H-pyrazol-4-carbonsäure (3'-fluor-4'-chlorbiphenyl-2-yl)-amid | Epoxiconazol |
| 2.9 | 1-Methyl-3-trifluormethyl-1H-pyrazol-4-carbonsäure (3',4'-dichlorbiphenyl-2-yl)-amid | Metconazol |
| 2.10 | 1-Methyl-3-trifluormethyl-1H-pyrazol-4-carbonsäure (3'-chlor-4'-fluorbiphenyl-2-yl)-amid | Metconazol |
| 2.11 | 1-Methyl-3-trifluormethyl-1H-pyrazol-4-carbonsäure (3',4'-difluorbiphenyl-2-yl)-amid | Metconazol |
| 2.12 | 1-Methyl-3-trifluormethyl-1H-pyrazol-4-carbonsäure (3'-fluor-4'-chlorbiphenyl-2-yl)-amid | Metconazol |
| 2.13 | 1-Methyl-3-difluormethyl-1H-pyrazol-4-carbonsäure (3'-chlor-4'-fluorbiphenyl-2-yl)-amid | Metconazol |
| 2.14 | 1-Methyl-3-difluormethyl-1H-pyrazol-4-carbonsäure (3',4'-difluorbiphenyl-2-yl)-amid | Metconazol |
| 2.15 | 1-Methyl-3-difluormethyl-1H-pyrazol-4-carbonsäure (3',4'-dichlorbiphenyl-2-yl)-amid | Metconazol |
| 2.16 | 1-Methyl-3-difluormethyl-1H-pyrazol-4-carbonsäure (3'-fluor-4'-chlorbiphenyl-2-yl)-amid | Metconazol |
| 2.17 | 1-Methyl-3-trifluormethyl-1H-pyrazol-4-carbonsäure (3',4'-dichlorbiphenyl-2-yl)-amid | Tebuconazol |
| 2.18 | 1-Methyl-3-trifluormethyl-1H-pyrazol-4-carbonsäure (3'-chlor-4'-fluorbiphenyl-2-yl)-amid | Tebuconazol |
| 2.19 | 1-Methyl-3-trifluormethyl-1H-pyrazol-4-carbonsäure (3',4'-difluorbiphenyl-2-yl)-amid | Tebuconazol |
| 2.20 | 1-Methyl-3-trifluormethyl-1H-pyrazol-4-carbonsäure (3'-fluor-4'-chlorbiphenyl-2-yl)-amid | Tebuconazol |
| 2.21 | 1-Methyl-3-difluormethyl-1H-pyrazol-4-carbonsäure (3'-chlor-4'-fluorbiphenyl-2-yl)-amid | Tebuconazol |
| 2.22 | 1-Methyl-3-difluormethyl-1H-pyrazol-4-carbonsäure (3',4'-difluorbiphenyl-2-yl)-amid | Tebuconazol |
| 2.23 | 1-Methyl-3-difluormethyl-1H-pyrazol-4-carbonsäure (3',4'-dichlorbiphenyl-2-yl)-amid | Tebuconazol |
| 2.24 | 1-Methyl-3-difluormethyl-1H-pyrazol-4-carbonsäure (3'-fluor-4'-chlorbiphenyl-2-yl)-amid | Tebuconazol |
| 2.25 | 1-Methyl-3-trifluormethyl-1H-pyrazol-4-carbonsäure (3',4'-dichlorbiphenyl-2-yl)-amid | Fluquinconazol |
| 2.26 | 1-Methyl-3-trifluormethyl-1H-pyrazol-4-carbonsäure (3'-chlor-4'-fluorbiphenyl-2-yl)-amid | Fluquinconazol |
| 2.27 | 1-Methyl-3-trifluormethyl-1H-pyrazol-4-carbonsäure (3',4'-difluorbiphenyl-2-yl)-amid | Fluquinconazol |

(fortgesetzt)

| Wirkstoffkombinationen von Verbindungen der Formel I mit Wirkstoffen II der Gruppe A): | | |
|---|---|---|
| Mischung | Verbindungen der Formel I | Wirkstoff II |
| 2.28 | 1-Methyl-3-trifluormethyl-1H-pyrazol-4-carbonsäure (3'-fluor-4'-chlorbiphenyl-2-yl)-amid | Fluquinconazol |
| 2.29 | 1-Methyl-3-difluormethyl-1H-pyrazol-4-carbonsäure (3'-chlor-4'-fluorbiphenyl-2-yl)-amid | Fluquinconazol |
| 2.30 | 1-Methyl-3-difluormethyl-1H-pyrazol-4-carbonsäure (3',4'-difluorbiphenyl-2-yl)-amid | Fluquinconazol |
| 2.31 | 1-Methyl-3-difluormethyl-1H-pyrazol-4-carbonsäure (3',4'-dichlorbiphenyl-2-yl)-amid | Fluquinconazol |
| 2.32 | 1-Methyl-3-difluormethyl-1H-pyrazol-4-carbonsäure (3'-fluor-4'-chlorbiphenyl-2-yl)-amid | Fluquinconazol |
| 2.33 | 1-Methyl-3-trifluormethyl-1H-pyrazol-4-carbonsäure (3',4'-dichlorbiphenyl-2-yl)-amid | Flutriafol |
| 2.34 | 1-Methyl-3-trifluormethyl-1H-pyrazol-4-carbonsäure (3'-chlor-4'-fluorbiphenyl-2-yl)-amid | Flutriafol |
| 2.35 | 1-Methyl-3-trifluormethyl-1H-pyrazol-4-carbonsäure (3',4'-difluorbiphenyl-2-yl)-amid | Flutriafol |
| 2.36 | 1-Methyl-3-trifluormethyl-1H-pyrazol-4-carbonsäure (3'-fluor-4'-chlorbiphenyl-2-yl)-amid | Flutriafol |
| 2.37 | 1-Methyl-3-difluormethyl-1H-pyrazol-4-carbonsäure (3'-chlor-4'-fluorbiphenyl-2-yl)-amid | Flutriafol |
| 2.38 | 1-Methyl-3-difluormethyl-1H-pyrazol-4-carbonsäure (3',4'-difluorbiphenyl-2-yl)-amid | Flutriafol |
| 2.39 | 1-Methyl-3-difluormethyl-1H-pyrazol-4-carbonsäure (3',4'-dichlorbiphenyl-2-yl)-amid | Flutriafol |
| 2.40 | 1-Methyl-3-difluormethyl-1H-pyrazol-4-carbonsäure (3'-fluor-4'-chlorbiphenyl-2-yl)-amid | Flutriafol |
| 2.41 | 1-Methyl-3-trifluormethyl-1H-pyrazol-4-carbonsäure (3',4'-dichlorbiphenyl-2-yl)-amid | Triticonazol |
| 2.42 | 1-Methyl-3-trifluormethyl-1H-pyrazol-4-carbonsäure (3'-chlor-4'-fluorbiphenyl-2-yl)-amid | Triticonazol |
| 2.43 | 1-Methyl-3-trifluormethyl-1H-pyrazol-4-carbonsäure (3',4'-difluorbiphenyl-2-yl)-amid | Triticonazol |
| 2.44 | 1-Methyl-3-trifluormethyl-1H-pyrazol-4-carbonsäure (3'-fluor-4'-chlorbiphenyl-2-yl)-amid | Triticonazol |
| 2.45 | 1-Methyl-3-difluormethyl-1H-pyrazol-4-carbonsäure (3'-chlor-4'-fluorbiphenyl-2-yl)-amid | Triticonazol |
| 2.46 | 1-Methyl-3-difluormethyl-1H-pyrazol-4-carbonsäure (3',4'-difluorbiphenyl-2-yl)-amid | Triticonazol |
| 2.47 | 1-Methyl-3-difluormethyl-1H-pyrazol-4-carbonsäure (3',4'-dichlorbiphenyl-2-yl)-amid | Triticonazol |
| 2.48 | 1-Methyl-3-difluormethyl-1H-pyrazol-4-carbonsäure (3'-fluor-4'-chlorbiphenyl-2-yl)-amid | Triticonazol |
| 2.49 | 1-Methyl-3-trifluormethyl-1H-pyrazol-4-carbonsäure (3',4'-dichlorbiphenyl-2-yl)-amid | Prochloraz |

(fortgesetzt)

| Wirkstoffkombinationen von Verbindungen der Formel I mit Wirkstoffen II der Gruppe A): | | |
|---|---|---|
| Mischung | Verbindungen der Formel I | Wirkstoff II |
| 2.50 | 1-Methyl-3-trifluormethyl-1H-pyrazol-4-carbonsäure (3'-chlor-4'-fluorbiphenyl-2-yl)-amid | Prochloraz |
| 2.51 | 1-Methyl-3-trifluormethyl-1H-pyrazol-4-carbonsäure (3',4'-difluorbiphenyl-2-yl)-amid | Prochloraz |
| 2.52 | 1-Methyl-3-trifluormethyl-1H-pyrazol-4-carbonsäure (3'-fluor-4'-chlorbiphenyl-2-yl)-amid | Prochloraz |
| 2.53 | 1-Methyl-3-difluormethyl-1H-pyrazol-4-carbonsäure (3'-chlor-4'-fluorbiphenyl-2-yl)-amid | Prochloraz |
| 2.54 | 1-Methyl-3-difluormethyl-1H-pyrazol-4-carbonsäure (3',4'-difluorbiphenyl-2-yl)-amid | Prochloraz |
| 2.55 | 1-Methyl-3-difluormethyl-1H-pyrazol-4-carbonsäure (3',4'-dichlorbiphenyl-2-yl)-amid | Prochloraz |
| 2.56 | 1-Methyl-3-difluormethyl-1H-pyrazol-4-carbonsäure (3'-fluor-4'-chlorbiphenyl-2-yl)-amid | Prochloraz |
| 2.57 | 1-Methyl-3-trifluormethyl-1H-pyrazol-4-carbonsäure (3',4'-dichlorbiphenyl-2-yl)-amid | Carbendazim |
| 2.58 | 1-Methyl-3-trifluormethyl-1H-pyrazol-4-carbonsäure (3'-chlor-4'-fluorbiphenyl-2-yl)-amid | Carbendazim |
| 2.59 | 1-Methyl-3-trifluormethyl-1H-pyrazol-4-carbonsäure (3',4'-difluorbiphenyl-2-yl)-amid | Carbendazim |
| 2.60 | 1-Methyl-3-trifluormethyl-1H-pyrazol-4-carbonsäure (3'-fluor-4'-chlorbiphenyl-2-yl)-amid | Carbendazim |
| 2.61 | 1-Methyl-3-difluormethyl-1H-pyrazol-4-carbonsäure (3'-chlor-4'-fluorbiphenyl-2-yl)-amid | Carbendazim |
| 2.62 | 1-Methyl-3-difluormethyl-1H-pyrazol-4-carbonsäure (3',4'-difluorbiphenyl-2-yl)-amid | Carbendazim |
| 2.63 | 1-Methyl-3-difluormethyl-1H-pyrazol-4-carbonsäure (3',4'-dichlorbiphenyl-2-yl)-amid | Carbendazim |
| 2.64 | 1-Methyl-3-difluormethyl-1H-pyrazol-4-carbonsäure (3'-fluor-4'-chlorbiphenyl-2-yl)-amid | Carbendazim |

Tabelle 3

| Wirkstoffkombinationen von Verbindungen der Formel I mit Wirkstoffen II der Gruppe B): | | |
|---|---|---|
| Mischung | Verbindungen der Formel I | Wirkstoff II |
| 3.1 | 1-Methyl-3-trifluormethyl-1H-pyrazol-4-carbonsäure (3',4'-dichlorbiphenyl-2-yl)-amid | Kresoxim-methyl |
| 3.2 | 1-Methyl-3-trifluormethyl-1H-pyrazol-4-carbonsäure (3'-chlor-4'-fluorbiphenyl-2-yl)-amid | Kresoxim-methyl |
| 3.3 | 1-Methyl-3-trifluormethyl-1H-pyrazol-4-carbonsäure (3',4'-difluorbiphenyl-2-yl)-amid | Kresoxim-methyl |
| 3.4 | 1-Methyl-3-trifluormethyl-1H-pyrazol-4-carbonsäure (3'-fluor-4'-chlorbiphenyl-2-yl)-amid | Kresoxim-methyl |

(fortgesetzt)

| Wirkstoffkombinationen von Verbindungen der Formel I mit Wirkstoffen II der Gruppe B): | | |
|---|---|---|
| Mischung | Verbindungen der Formel I | Wirkstoff II |
| 3.5 | 1-Methyl-3-difluormethyl-1H-pyrazol-4-carbonsäure (3'-chlor-4'-fluorbiphenyl-2-yl)-amid | Kresoxim-methyl |
| 3.6 | 1-Methyl-3-difluormethyl-1H-pyrazol-4-carbonsäure (3',4'-difluorbiphenyl-2-yl)-amid | Kresoxim-methyl |
| 3.7 | 1-Methyl-3-difluormethyl-1H-pyrazol-4-carbonsäure (3',4'-dichlorbiphenyl-2-yl)-amid | Kresoxim-methyl |
| 3.8 | 1-Methyl-3-difluormethyl-1H-pyrazol-4-carbonsäure (3'-fluor-4'-chlorbiphenyl-2-yl)-amid | Kresoxim-methyl |
| 3.9 | 1-Methyl-3-trifluormethyl-1H-pyrazol-4-carbonsäure (3',4'-dichlorbiphenyl-2-yl)-amid | Pyraclostrobin |
| 3.10 | 1-Methyl-3-trifluormethyl-1H-pyrazol-4-carbonsäure (3'-chlor-4'-fluorbiphenyl-2-yl)-amid | Pyraclostrobin |
| 3.11 | 1-Methyl-3-trifluormethyl-1H-pyrazol-4-carbonsäure (3',4'-difluorbiphenyl-2-yl)-amid | Pyraclostrobin |
| 3.12 | 1-Methyl-3-trifluormethyl-1H-pyrazol-4-carbonsäure (3'-fluor-4'-chlorbiphenyl-2-yl)-amid | Pyraclostrobin |
| 3.13 | 1-Methyl-3-difluormethyl-1H-pyrazol-4-carbonsäure (3'-chlor-4'-fluorbiphenyl-2-yl)-amid | Pyraclostrobin |
| 3.14 | 1-Methyl-3-difluormethyl-1H-pyrazol-4-carbonsäure (3',4'-difluorbiphenyl-2-yl)-amid | Pyraclostrobin |
| 3.15 | 1-Methyl-3-difluormethyl-1H-pyrazol-4-carbonsäure (3',4'-dichlorbiphenyl-2-yl)-amid | Pyraclostrobin |
| 3.16 | 1-Methyl-3-difluormethyl-1H-pyrazol-4-carbonsäure (3'-fluor-4'-chlorbiphenyl-2-yl)-amid | Pyraclostrobin |
| 3.17 | 1-Methyl-3-trifluormethyl-1H-pyrazol-4-carbonsäure (3',4'-dichlorbiphenyl-2-yl)-amid | Orysastrobin |
| 3.18 | 1-Methyl-3-trifluormethyl-1H-pyrazol-4-carbonsäure (3'-chlor-4'-fluorbiphenyl-2-yl)-amid | Orysastrobin |
| 3.19 | 1-Methyl-3-trifluormethyl-1H-pyrazol-4-carbonsäure (3',4'-difluorbiphenyl-2-yl)-amid | Orysastrobin |
| 3.20 | 1-Methyl-3-trifluormethyl-1H-pyrazol-4-carbonsäure (3'-fluor-4'-chlorbiphenyl-2-yl)-amid | Orysastrobin |
| 3.21 | 1-Methyl-3-difluormethyl-1H-pyrazol-4-carbonsäure (3'-chlor-4'-fluorbiphenyl-2-yl)-amid | Orysastrobin |
| 3.22 | 1-Methyl-3-difluormethyl-1H-pyrazol-4-carbonsäure (3',4'-difluorbiphenyl-2-yl)-amid | Orysastrobin |
| 3.23 | 1-Methyl-3-difluormethyl-1H-pyrazol-4-carbonsäure (3',4'-dichlorbiphenyl-2-yl)-amid | Orysastrobin |
| 3.24 | 1-Methyl-3-difluormethyl-1H-pyrazol-4-carbonsäure (3'-fluor-4'-chlorbiphenyl-2-yl)-amid | Orysastrobin |

Tabelle 4

| Wirkstoffkombinationen von Verbindungen der Formel I mit Wirkstoffen II der Gruppe C): | | |
|---|---|---|
| Mischung | Verbindungen der Formel I | Wirkstoff II |
| 4.1 | 1-Methyl-3-trifluormethyl-1H-pyrazol-4-carbonsäure (3',4'-dichlorbiphenyl-2-yl)-amid | Dimethomorph |
| 4.2 | 1-Methyl-3-trifluormethyl-1H-pyrazol-4-carbonsäure (3'-chlor-4'-fluorbiphenyl-2-yl)-amid | Dimethomorph |
| 4.3 | 1-Methyl-3-trifluormethyl-1H-pyrazol-4-carbonsäure (3',4'-difluorbiphenyl-2-yl)-amid | Dimethomorph |
| 4.4 | 1-Methyl-3-trifluormethyl-1H-pyrazol-4-carbonsäure (3'-fluor-4'-chlorbiphenyl-2-yl)-amid | Dimethomorph |
| 4.5 | 1-Methyl-3-difluormethyl-1H-pyrazol-4-carbonsäure (3'-chlor-4'-fluorbiphenyl-2-yl)-amid | Dimethomorph |
| 4.6 | 1-Methyl-3-difluormethyl-1H-pyrazol-4-carbonsäure (3',4'-difluorbiphenyl-2-yl)-amid | Dimethomorph |
| 4.7 | 1-Methyl-3-difluormethyl-1H-pyrazol-4-carbonsäure (3',4'-dichlorbiphenyl-2-yl)-amid | Dimethomorph |
| 4.8 | 1-Methyl-3-difluormethyl-1H-pyrazol-4-carbonsäure (3'-fluor-4'-chlorbiphenyl-2-yl)-amid | Dimethomorph |

Tabelle 5

| Wirkstoffkombinationen von Verbindungen der Formel I mit Wirkstoffen II der Gruppe D): | | |
|---|---|---|
| Mischung | Verbindungen der Formel I | Wirkstoff II |
| 5.1 | 1-Methyl-3-trifluormethyl-1H-pyrazol-4-carbonsäure (3',4'-dichlorbiphenyl-2-yl)-amid | Pyrimethanil |
| 5.2 | 1-Methyl-3-trifluormethyl-1H-pyrazol-4-carbonsäure (3'-chlor-4'-fluorbiphenyl-2-yl)-amid | Pyrimethanil |
| 5.3 | 1-Methyl-3-trifluormethyl-1H-pyrazol-4-carbonsäure (3',4'-difluorbiphenyl-2-yl)-amid | Pyrimethanil |
| 5.4 | 1-Methyl-3-trifluormethyl-1H-pyrazol-4-carbonsäure (3'-fluor-4'-chlorbiphenyl-2-yl)-amid | Pyrimethanil |
| 5.5 | 1-Methyl-3-difluormethyl-1H-pyrazol-4-carbonsäure (3'-chlor-4'-fluorbiphenyl-2-yl)-amid | Pyrimethanil |
| 5.6 | 1-Methyl-3-difluormethyl-1H-pyrazol-4-carbonsäure (3',4'-difluorbiphenyl-2-yl)-amid | Pyrimethanil |
| 5.7 | 1-Methyl-3-difluormethyl-1H-pyrazol-4-carbonsäure (3',4'-dichlorbiphenyl-2-yl)-amid | Pyrimethanil |
| 5.8 | 1-Methyl-3-difluormethyl-1H-pyrazol-4-carbonsäure (3'-fluor-4'-chlorbiphenyl-2-yl)-amid | Pyrimethanil |

(fortgesetzt)

| Wirkstoffkombinationen von Verbindungen der Formel I mit Wirkstoffen II der Gruppe D): | | |
|---|---|---|
| Mischung | Verbindungen der Formel I | Wirkstoff II |
| 5.9 | 1-Methyl-3-trifluormethyl-1H-pyrazol-4-carbonsäure (3',4'-dichlorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.10 | 1-Methyl-3-trifluormethyl-1H-pyrazol-4-carbonsäure (3'-chlor-4'-fluorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.11 | 1-Methyl-3-trifluormethyl-1H-pyrazol-4-carbonsäure (3',4'-difluorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.12 | 1-Methyl-3-trifluormethyl-1H-pyrazol-4-carbonsäure (3'-fluor-4'-chlorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.13 | 1-Methyl-3-difluormethyl-1H-pyrazol-4-carbonsäure (3'-chlor-4'-fluorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.14 | 1-Methyl-3-difluormethyl-1H-pyrazol-4-carbonsäure (3',4'-difluorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.15 | 1-Methyl-3-difluormethyl-1H-pyrazol-4-carbonsäure (3',4'-dichlorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.16 | 1-Methyl-3-difluormethyl-1H-pyrazol-4-carbonsäure (3'-fluor-4'-chlorbiphenyl-2-yl)-amid | 5-Chlor-7-(4-methylpiperidin-1-yl)-6-(2,4,6-trifluor-phenyl)-[1,2,4]triazolo[1,5-a]pyrimidin |
| 5.17 | 1-Methyl-3-trifluormethyl-1H-pyrazol-4-carbonsäure (3',4'-dichlorbiphenyl-2-yl)-amid | Dodemorph |
| 5.18 | 1-Methyl-3-trifluormethyl-1H-pyrazol-4-carbonsäure (3'-chlor-4'-fluorbiphenyl-2-yl)-amid | Dodemorph |
| 5.19 | 1-Methyl-3-trifluormethyl-1H-pyrazol-4-carbonsäure (3',4'-difluorbiphenyl-2-yl)-amid | Dodemorph |
| 5.20 | 1-Methyl-3-trifluormethyl-1H-pyrazol-4-carbonsäure (3'-fluor-4'-chlorbiphenyl-2-yl)-amid | Dodemorph |
| 5.21 | 1-Methyl-3-difluormethyl-1H-pyrazol-4-carbonsäure (3'-chlor-4'-fluorbiphenyl-2-yl)-amid | Dodemorph |
| 5.22 | 1-Methyl-3-difluormethyl-1H-pyrazol-4-carbonsäure (3',4'-difluorbiphenyl-2-yl)-amid | Dodemorph |
| 5.23 | 1-Methyl-3-difluormethyl-1H-pyrazol-4-carbonsäure (3',4'-dichlorbiphenyl-2-yl)-amid | Dodemorph |

(fortgesetzt)

| Wirkstoffkombinationen von Verbindungen der Formel I mit Wirkstoffen II der Gruppe D): | | |
|---|---|---|
| Mischung | Verbindungen der Formel I | Wirkstoff II |
| 5.24 | 1-Methyl-3-difluormethyl-1H-pyrazol-4-carbonsäure (3'-fluor-4'-chlorbiphenyl-2-yl)-amid | Dodemorph |
| 5.25 | 1-Methyl-3-trifluormethyl-1H-pyrazol-4-carbonsäure (3',4'-dichlorbiphenyl-2-yl)-amid | Fenpropimorph |
| 5.26 | 1-Methyl-3-trifluormethyl-1H-pyrazol-4-carbonsäure (3'-chlor-4'-fluorbiphenyl-2-yl)-amid | Fenpropimorph |
| 5.27 | 1-Methyl-3-trifluormethyl-1H-pyrazol-4-carbonsäure (3',4'-difluorbiphenyl-2-yl)-amid | Fenpropimorph |
| 5.28 | 1-Methyl-3-trifluormethyl-1H-pyrazol-4-carbonsäure (3'-fluor-4'-chlorbiphenyl-2-yl)-amid | Fenpropimorph |
| 5.29 | 1-Methyl-3-difluormethyl-1H-pyrazol-4-carbonsäure (3'-chlor-4'-fluorbiphenyl-2-yl)-amid | Fenpropimorph |
| 5.30 | 1-Methyl-3-difluormethyl-1H-pyrazol-4-carbonsäure (3',4'-difluorbiphenyl-2-yl)-amid | Fenpropimorph |
| 5.31 | 1-Methyl-3-difluormethyl-1H-pyrazol-4-carbonsäure (3',4'-dichlorbiphenyl-2-yl)-amid | Fenpropimorph |
| 5.32 | 1-Methyl-3-difluormethyl-1H-pyrazol-4-carbonsäure (3'-fluor-4'-chlorbiphenyl-2-yl)-amid | Fenpropimorph |
| 5.33 | 1-Methyl-3-trifluormethyl-1H-pyrazol-4-carbonsäure (3',4'-dichlorbiphenyl-2-yl)-amid | Tridemorph |
| 5.34 | 1-Methyl-3-trifluormethyl-1H-pyrazol-4-carbonsäure (3'-chlor-4'-fluorbiphenyl-2-yl)-amid | Tridemorph |
| 5.35 | 1-Methyl-3-trifluormethyl-1H-pyrazol-4-carbonsäure (3',4'-difluorbiphenyl-2-yl)-amid | Tridemorph |
| 5.36 | 1-Methyl-3-trifluormethyl-1H-pyrazol-4-carbonsäure (3'-fluor-4'-chlorbiphenyl-2-yl)-amid | Tridemorph |
| 5.37 | 1-Methyl-3-difluormethyl-1H-pyrazol-4-carbonsäure (3'-chlor-4'-fluorbiphenyl-2-yl)-amid | Tridemorph |
| 5.38 | 1-Methyl-3-difluormethyl-1H-pyrazol-4-carbonsäure (3',4'-difluorbiphenyl-2-yl)-amid | Tridemorph |

(fortgesetzt)

| Wirkstoffkombinationen von Verbindungen der Formel I mit Wirkstoffen II der Gruppe D): | | |
|---|---|---|
| Mischung | Verbindungen der Formel I | Wirkstoff II |
| 5.39 | 1-Methyl-3-difluormethyl-1H-pyrazol-4-carbonsäure (3',4'-dichlorbiphenyl-2-yl)-amid | Tridemorph |
| 5.40 | 1-Methyl-3-difluormethyl-1H-pyrazol-4-carbonsäure (3'-fluor-4'-chlorbiphenyl-2-yl)-amid | Tridemorph |
| 5.41 | 1-Methyl-3-trifluormethyl-1H-pyrazol-4-carbonsäure (3',4'-dichlorbiphenyl-2-yl)-amid | Iprodione |
| 5.42 | 1-Methyl-3-trifluormethyl-1H-pyrazol-4-carbonsäure (3'-chlor-4'-fluorbiphenyl-2-yl)-amid | Iprodione |
| 5.43 | 1-Methyl-3-trifluormethyl-1H-pyrazol-4-carbonsäure (3',4'-difluorbiphenyl-2-yl)-amid | Iprodione |
| 5.44 | 1-Methyl-3-trifluormethyl-1H-pyrazol-4-carbonsäure (3'-fluor-4'-chlorbiphenyl-2-yl)-amid | Iprodione |
| 5.45 | 1-Methyl-3-difluormethyl-1H-pyrazol-4-carbonsäure (3'-chlor-4'-fluorbiphenyl-2-yl)-amid | Iprodione |
| 5.46 | 1-Methyl-3-difluormethyl-1H-pyrazol-4-carbonsäure (3',4'-difluorbiphenyl-2-yl)-amid | Iprodione |
| 5.47 | 1-Methyl-3-difluormethyl-1H-pyrazol-4-carbonsäure (3',4'-dichlorbiphenyl-2-yl)-amid | Iprodione |
| 5.48 | 1-Methyl-3-difluormethyl-1H-pyrazol-4-carbonsäure (3'-fluor-4'-chlorbiphenyl-2-yl)-amid | Iprodione |
| 5.49 | 1-Methyl-3-trifluormethyl-1H-pyrazol-4-carbonsäure (3',4'-dichlorbiphenyl-2-yl)-amid | Vinclozolin |
| 5.50 | 1-Methyl-3-trifluormethyl-1H-pyrazol-4-carbonsäure (3'-chlor-4'-fluorbiphenyl-2-yl)-amid | Vinclozolin |
| 5.51 | 1-Methyl-3-trifluormethyl-1H-pyrazol-4-carbonsäure (3',4'-difluorbiphenyl-2-yl)-amid | Vinclozolin |
| 5.52 | 1-Methyl-3-trifluormethyl-1H-pyrazol-4-carbonsäure (3'-fluor-4'-chlorbiphenyl-2-yl)-amid | Vinclozolin |
| 5.53 | 1-Methyl-3-difluormethyl-1H-pyrazol-4-carbonsäure (3'-chlor-4'-fluorbiphenyl-2-yl)-amid | Vinclozolin |

(fortgesetzt)

| Wirkstoffkombinationen von Verbindungen der Formel I mit Wirkstoffen II der Gruppe D): | | |
|---|---|---|
| Mischung | Verbindungen der Formel I | Wirkstoff II |
| 5.54 | 1-Methyl-3-difluormethyl-1H-pyrazol-4-carbonsäure (3',4'-difluorbiphenyl-2-yl)-amid | Vinclozolin |
| 5.55 | 1-Methyl-3-difluormethyl-1H-pyrazol-4-carbonsäure (3',4'-dichlorbiphenyl-2-yl)-amid | Vinclozolin |
| 5.56 | 1-Methyl-3-difluormethyl-1H-pyrazol-4-carbonsäure (3'-fluor-4'-chlorbiphenyl-2-yl)-amid | Vinclozolin |

Tabelle 6

| Wirkstoffkombinationen von Verbindungen der Formel I mit Wirkstoffen II der Gruppe E): | | |
|---|---|---|
| Mischung | Verbindungen der Formel I | Wirkstoff II |
| 6.1 | 1-Methyl-3-trifluormethyl-1H-pyrazol-4-carbonsäure (3',4'-dichlorbiphenyl-2-yl)-amid | Mancozeb |
| 6.2 | 1-Methyl-3-trifluormethyl-1H-pyrazol-4-carbonsäure (3'-chlor-4'-fluorbiphenyl-2-yl)-amid | Mancozeb |
| 6.3 | 1-Methyl-3-trifluormethyl-1H-pyrazol-4-carbonsäure (3',4'-difluorbiphenyl-2-yl)-amid | Mancozeb |
| 6.4 | 1-Methyl-3-trifluormethyl-1H-pyrazol-4-carbonsäure (3'-fluor-4'-chlorbiphenyl-2-yl)-amid | Mancozeb |
| 6.5 | 1-Methyl-3-difluormethyl-1H-pyrazol-4-carbonsäure (3'-chlor-4'-fluorbiphenyl-2-yl)-amid | Mancozeb |
| 6.6 | 1-Methyl-3-difluormethyl-1H-pyrazol-4-carbonsäure (3',4'-difluorbiphenyl-2-yl)-amid | Mancozeb |
| 6.7 | 1-Methyl-3-difluormethyl-1H-pyrazol-4-carbonsäure (3',4'-dichlorbiphenyl-2-yl)-amid | Mancozeb |
| 6.8 | 1-Methyl-3-difluormethyl-1H-pyrazol-4-carbonsäure (3'-fluor-4'-chlorbiphenyl-2-yl)-amid | Mancozeb |
| 6.9 | 1-Methyl-3-trifluormethyl-1H-pyrazol-4-carbonsäure (3',4'-dichlorbiphenyl-2-yl)-amid | Metiram |
| 6.10 | 1-Methyl-3-trifluormethyl-1H-pyrazol-4-carbonsäure (3'-chlor-4'-fluorbiphenyl-2-yl)-amid | Metiram |
| 6.11 | 1-Methyl-3-trifluormethyl-1H-pyrazol-4-carbonsäure (3',4'-difluorbiphenyl-2-yl)-amid | Metiram |
| 6.12 | 1-Methyl-3-trifluormethyl-1H-pyrazol-4-carbonsäure (3'-fluor-4'-chlorbiphenyl-2-yl)-amid | Metiram |
| 6.13 | 1-Methyl-3-difluormethyl-1H-pyrazol-4-carbonsäure (3'-chlor-4'-fluorbiphenyl-2-yl)-amid | Metiram |
| 6.14 | 1-Methyl-3-difluormethyl-1H-pyrazol-4-carbonsäure (3',4'-difluorbiphenyl-2-yl)-amid | Metiram |
| 6.15 | 1-Methyl-3-difluormethyl-1H-pyrazol-4-carbonsäure (3',4'-dichlorbiphenyl-2-yl)-amid | Metiram |

(fortgesetzt)

| Wirkstoffkombinationen von Verbindungen der Formel I mit Wirkstoffen II der Gruppe E): | | |
|---|---|---|
| Mischung | Verbindungen der Formel I | Wirkstoff II |
| 6.16 | 1-Methyl-3-difluormethyl-1H-pyrazol-4-carbonsäure (3'-fluor-4'-chlorbiphenyl-2-yl)-amid | Metiram |

Tabelle 7

| Wirkstoffkombinationen von Verbindungen der Formel I mit Wirkstoffen II der Gruppe F): | | |
|---|---|---|
| Mischung | Verbindungen der Formel I | Wirkstoff II |
| 7.1 | 1-Methyl-3-trifluormethyl-1H-pyrazol-4-carbonsäure (3',4'-dichlorbiphenyl-2-yl)-amid | Chlorthalonil |
| 7.2 | 1-Methyl-3-trifluormethyl-1H-pyrazol-4-carbonsäure (3'-chlor-4'-fluorbiphenyl-2-yl)-amid | Chlorthalonil |
| 7.3 | 1-Methyl-3-trifluormethyl-1H-pyrazol-4-carbonsäure (3',4'-difluorbiphenyl-2-yl)-amid | Chlorthalonil |
| 7.4 | 1-Methyl-3-trifluormethyl-1H-pyrazol-4-carbonsäure (3'-fluor-4'-chlorbiphenyl-2-yl)-amid | Chlorthalonil |
| 7.5 | 1-Methyl-3-difluormethyl-1H-pyrazol-4-carbonsäure (3'-chlor-4'-fluorbiphenyl-2-yl)-amid | Chlorthalonil |
| 7.6 | 1-Methyl-3-difluormethyl-1H-pyrazol-4-carbonsäure (3',4'-difluorbiphenyl-2-yl)-amid | Chlorthalonil |
| 7.7 | 1-Methyl-3-difluormethyl-1H-pyrazol-4-carbonsäure (3',4'-dichlorbiphenyl-2-yl)-amid | Chlorthalonil |
| 7.8 | 1-Methyl-3-difluormethyl-1H-pyrazol-4-carbonsäure (3'-fluor-4'-chlorbiphenyl-2-yl)-amid | Chlorthalonil |
| 7.9 | 1-Methyl-3-trifluormethyl-1H-pyrazol-4-carbonsäure (3',4'-dichlorbiphenyl-2-yl)-amid | Metrafenon |
| 7.10 | 1-Methyl-3-trifluormethyl-1H-pyrazol-4-carbonsäure (3'-chlor-4'-fluorbiphenyl-2-yl)-amid | Metrafenon |
| 7.11 | 1-Methyl-3-trifluormethyl-1H-pyrazol-4-carbonsäure (3',4'-difluorbiphenyl-2-yl)-amid | Metrafenon |
| 7.12 | 1-Methyl-3-trifluormethyl-1H-pyrazol-4-carbonsäure (3'-fluor-4'-chlorbiphenyl-2-yl)-amid | Metrafenon |
| 7.13 | 1-Methyl-3-difluormethyl-1H-pyrazol-4-carbonsäure (3'-chlor-4'-fluorbiphenyl-2-yl)-amid | Metrafenon |
| 7.14 | 1-Methyl-3-difluormethyl-1H-pyrazol-4-carbonsäure (3',4'-difluorbiphenyl-2-yl)-amid | Metrafenon |
| 7.15 | 1-Methyl-3-difluormethyl-1H-pyrazol-4-carbonsäure (3',4'-dichlorbiphenyl-2-yl)-amid | Metrafenon |
| 7.16 | 1-Methyl-3-difluormethyl-1H-pyrazol-4-carbonsäure (3'-fluor-4'-chlorbiphenyl-2-yl)-amid | Metrafenon |
| 7.17 | 1-Methyl-3-trifluormethyl-1H-pyrazol-4-carbonsäure (3',4'-dichlorbiphenyl-2-yl)-amid | Phosphorige Säure |
| 7.18 | 1-Methyl-3-trifluormethyl-1H-pyrazol-4-carbonsäure (3'-chlor-4'-fluorbiphenyl-2-yl)-amid | Phosphorige Säure |

(fortgesetzt)

| Wirkstoffkombinationen von Verbindungen der Formel I mit Wirkstoffen II der Gruppe F): | | |
|---|---|---|
| Mischung | Verbindungen der Formel I | Wirkstoff II |
| 7.19 | 1-Methyl-3-trifluormethyl-1H-pyrazol-4-carbonsäure (3',4'-difluorbiphenyl-2-yl)-amid | Phosphorige Säure |
| 7.20 | 1-Methyl-3-trifluormethyl-1H-pyrazol-4-carbonsäure (3'-fluor-4'-chlorbiphenyl-2-yl)-amid | Phosphorige Säure |
| 7.21 | 1-Methyl-3-difluormethyl-1H-pyrazol-4-carbonsäure (3'-chlor-4'-fluorbiphenyl-2-yl)-amid | Phosphorige Säure |
| 7.22 | 1-Methyl-3-difluormethyl-1H-pyrazol-4-carbonsäure (3',4'-difluorbiphenyl-2-yl)-amid | Phosphorige Säure |
| 7.23 | 1-Methyl-3-difluormethyl-1H-pyrazol-4-carbonsäure (3',4'-dichlorbiphenyl-2-yl)-amid | Phosphorige Säure |
| 7.24 | 1-Methyl-3-difluormethyl-1H-pyrazol-4-carbonsäure (3'-fluor-4'-chlorbiphenyl-2-yl)-amid | Phosphorige Säure |

Die Mischungen aus Verbindung(en) I mit mindestens einem der Wirkstoffe II bzw. die gleichzeitige gemeinsame oder getrennte Verwendung einer Verbindung I mit mindestens einem der Wirkstoffe II, zeichnen sich aus durch eine hervorragende Wirksamkeit gegen ein breites Spektrum von pflanzenpathogenen Pilzen, insbesondere aus der Klasse der Ascomyceten, Basidiomyceten, Deuteromyceten und Peronosporomyceten (syn. Oomyceten). Sie sind zum Teil systemisch wirksam und können im Pflanzenschutz als Blatt-, Beiz- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Bananen, Baumwolle, Soja, Kaffee, Zuckerrohr, Wein, Obst- und Zierpflanzen und Gemüsepflanzen wie Gurken, Bohnen, Tomaten, Kartoffeln und Kürbissen, sowie an den

Samen dieser Pflanzen.

Speziell eignen sie sich zur Bekämpfung folgender Pflanzenkrankheiten:

- *Alternaria* Arten an Gemüse, Raps, Zuckerrüben und Obst und Reis (z.B. *A. solani* oder *A. alternata* an Kartoffel und anderen Pflanzen),
- *Aphanomyces* Arten an Zuckerrüben und Gemüse,
- *Bipolaris*- und *Drechslera* Arten an Mais, Getreide, Reis und Rasen (z.B. *D. teres* an Gerste, *D. tritci-repentis* an Weizen),
- *Blumeria graminis* (Echter Mehltau) an Getreide,
- *Botrytis cinerea* (Grauschimmel) an Erdbeeren, Gemüse, Blumen und Weinreben,
- *Bremia lactucae* an Salat,
- *Cercospora* Arten an Mais, Sojabohnen, Reis und Zuckerrüben (z.B. *C. beticula* an Zuckerrüben),
- *Cochliobolus* Arten an Mais, Getreide, Reis (z.B. *Cochliobolus sativus* an Getreide, *Cochliobolus miyabeanus* an Reis),
- *Colletotricum* Arten an Sojabohnen, Baumwolle und anderen Pflanzen (z.B. *C. acutatum* an verschiedenen Pflanzen),
- *Exserohilum* Arten an Mais,
- *Erysiphe cichoracearum*und *Sphaerotheca fuliginea* an Gurkengewächsen,
- *Fusarium* und *Verticillium* Arten (z.B. *V. dahliae)* an verschiedenen Pflanzen (z.B. *F. graminearum* an Weizen),
- *Gaeumanomyces graminis* an Getreide,
- *Gibberella* Arten an Getreide und Reis (z.B. *Gibberella fujikuroi* an Reis),
- *Grainstaining complex* an Reis,
- *Helminthosporium* Arten (z.B. *H. graminicola*) an Mais und Reis,
- *Michrodochium nivale* an Getreide,
- *Mycosphaerella* Arten an Getreide, Bananen und Erdnüssen *(M. graminicola* an Weizen, *M fijiesis* an Banane*)*,
- *Phakopsara pachyrhizi* und *Phakopsara meibomiae* an Sojabohnen,
- *Phomopsis* Arten an Sojabohnen, Sonnenblumen und Weinreben (*P. viticola* an Weinreben, *P. helianthii* an Sonnenblumen),
- *Phytophthora infestans* an Kartoffeln und Tomaten,
- *Plasmopara viticola* an Weinreben,

- *Podosphaera leucotricha* an Apfel,
- *Pseudocercosporella herpotrichoides* an Getreide,
- *Pseudoperonospora* Arten an Hopfen und Gurkengewächsen (z.B. *P. cubenis* an Gurke),
- *Puccinia* Arten an Getreide, Mais und Spargel (*P. triticina und P. striformis an Weizen, P. asparagi* an Spargel),
- *Pyrenophora* Arten an Getreide,
- *Pyricularia oryzae, Corticium sasakii, Sarocladium oryzae, S.attenuatum, Entyloma oryzae* an Reis,
- *Pyricularia grisea* an Rasen und Getreide,
- *Pythium spp.* an Rasen, Reis, Mais, Baumwolle, Raps, Sonnenblumen, Zuckerrüben, Gemüse und anderen Pflanzen,
- *Rhizoctonia-Arten* (z.B. *R. solani*) an Baumwolle, Reis, Kartoffeln, Rasen, Mais, Raps, Kartoffeln, Zuckerrüben, Gemüse und anderen Pflanzen,
- *Sclerotinia* Arten (z.B. *S. sclerotiorum*) an Raps, Sonnenblumen und anderen Pflanzen,
- *Septoria tritici* und *Stagonospora nodorum* an Weizen,
- *Erysiphe* (syn. *Uncinulanecator)* an Weinrebe,
- *Setospaeria* Arten an Mais und Rasen,
- *Sphacelotheca reilinia* an Mais,
- *Thievaliopsis* Arten an Sojabohnen und Baumwolle,
- *Tilletia Arten* an Getreide,
- *Ustilago* Arten an Getreide, Mais und Zuckerrübe und
- *Venturia* Arten (Schorf) an Apfel und Birne (z.B. *V. inaequalis* an Apfel).

Die erfindungsgemäßen Mischungen eignen sich außerdem zur Bekämpfung von Schadpilzen im Materialschutz (z.B. Holz, Papier, Dispersionen für den Anstrich, Fasern bzw. Gewebe) und im Vorratsschutz. Im Holzschutz finden insbesondere folgende Schadpilze Beachtung: Ascomyceten wie *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomyceten wie *Coniophora* spp., *Coriolus* spp., *Gloeophyllum* spp., *Lentinus* spp., *Pleurotus* spp., *Poria* spp., *Serpula* spp. und *Tyromyces* spp., Deuteromyceten wie *Aspergillus* spp., *Cladosporium* spp., *Penicillium* spp., *Trichoderma* spp., *Alternaria* spp., *Paecilomyces* spp. und Zygomyceten wie *Mucor* spp., darüber hinaus im Materialschutz folgende Hefepilze: *Candida* spp. und *Saccharomyces cerevisae.*

Die Mischungen aus einer Verbindung I und eines Wirkstoffs II eignen sich insbesondere zur Bekämpfung von *Botrytis* Arten.

Die Verbindung(en) I mit mindestens einem der Wirkstoffe II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Bevorzugt setzt man bei der Bereitstellung der Mischungen die reinen Wirkstoffe I bis II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

**Üblicherweise kommen Mischungen aus mindestens einer Verbindung I und mindestens einem Wirkstoff II zur Anwendung. Dabei können Mischungen aus mindestens einer Verbindung I mit zwei oder gegebenenfalls mehreren Aktivkomponenten besondere Vorteile bieten.**

**Als weitere Aktivkomponenten im voranstehenden Sinne kommen besonders die eingangs genannten Wirkstoffe II und insbesondere die voranstehend genannten bevorzugten Wirkstoffe II in Frage.**

**Die Verbindung I und der Wirkstoff II werden üblicherweise in einem Gewichtsverhältnis von 100:1 bis 1:100, vorzugsweise 20:1 bis 1:20, insbesondere 10:1 bis 1:10 angewandt.**

**Die weiteren Aktivkomponenten werden gewünschtenfalls im Verhältnis von 20:1 bis 1:20 zu der Verbindung I zugemischt.**

Die Aufwandmengen der erfindungsgemäßen Mischungen liegen, vor allem bei landwirtschaftlichen Kulturflächen, je nach Art der Verbindungen und des gewünschten Effekts bei 5 bis 2000 g/ha, vorzugsweise 20 bis 1500 g/ha, insbesondere 50 bis 1000 g/ha.

Die Aufwandmengen für die Verbindungen I liegen entsprechend in der Regel bei 1 bis 1000 g/ha, vorzugsweise 10 bis 900 g/ha, insbesondere 20 bis 750 g/ha.

Die Aufwandmengen für die Wirkstoffe II liegen entsprechend in der Regel bei 1 bis 2000 g/ha, vorzugsweise 10 bis 1500 g/ha, insbesondere 40 bis 1000 g/ha.

Bei der Saatgutbehandlung werden im allgemeinen Aufwandmengen an Mischung von 1 bis 1000 g pro 100 kg Saatgut, vorzugsweise 1 bis 750 g pro 100 kg, insbesondere 5 bis 500 g pro 100 kg Saatgut, verwendet.

Das Verfahren zur Bekämpfung von Schadpilzen erfolgt durch die getrennte oder gemeinsame Applikation von Verbindung(en) I und Wirkstoff(en) II oder einer Mischung aus Verbindung(en) I mit mindestens einem der Wirkstoffe II durch Besprühen oder Bestäuben der Samen, der Pflanzen oder der Böden vor oder nach der Aussaat der Pflanzen

oder vor oder nach dem Auflaufen der Pflanzen.

Die erfindungsgemäßen Mischungen, bzw. die Verbindung(en) I und mindestens einer der Wirkstoffe II können in die üblichen Formulierungen übergeführt werden, Z.B. Lösungen, Emulsionen, Suspensionen, Stäube, Pulver, Pasten oder Granulate. Die Anwendungsform richtet sich nach dem jeweiligen Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Verstrecken der Wirkstoffe mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso® Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (N-Methylpyrrolidon, NOP), Acetate (Glykoldiacetat), Glykole, Dimethylfettsäureamide, Fettsäuren und Fettsäureester. Grundsätzlich können auch Lösungsmittelgemische verwendet werden.
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Lignin-Sulfitablaugen und Methylcellulose.

**Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.**

**Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.**

Pulver-, Streu- und Stäubemittel können durch Mischen oder gemeinsames Vermahlen der wirksamen Substanzen mit einem festen Trägerstoff hergestellt werden.

Granulate (z.B. Umhüllungs-, Imprägnierungs- oder Homogengranulate) können durch Bindung der Wirkstoffe an feste Trägerstoffe hergestellt werden. Feste Trägerstoffe sind z.B. Mineralerden wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,01 bis 95 Gew.-%, vorzugsweise 0,1 bis 90 Gew.-% der Wirkstoffe. Die Wirkstoffe werden dabei in einer Reinheit von 90% bis 100%, vorzugsweise 95% bis 100% (nach NMR- oder HPLC-Spektrum) eingesetzt. Beispiele für erfindungsgemäße Formulierungen sind: 1. Produkte zur Verdünnung in Wasser

A) Wasserlösliche Konzentrate (SL)

10 Gew.-Teile einer erfindungsgemäßen Mischung werden mit 90 Gew.-Teilen Wasser oder einem wasserlöslichen Lösungsmittel gelöst. Alternativ werden Netzmittel oder andere Hilfsmittel zugefügt. Bei der Verdünnung in Wasser löst sich der Wirkstoff. Man erhält auf diese Weise eine Formulierung mit einem Wirkstoffgehalt von 10 Gew.-%.

B) Dispergierbare Konzentrate (DC)

20 Gew.-Teile einer erfindungsgemäßen Mischung werden in 70 Gew.-Teilen Cyclohexanon unter Zusatz von 10 Gew.-Teilen eines Dispergiermittels z.B. Polyvinylpyrrolidon gelöst. Bei Verdünnung in Wasser ergibt sich eine Dispersion. Der Wirkstoffgehalt beträgt 20 Gew.-%

C) Emulgierbare Konzentrate (EC)

15 Gew.-Teile einer erfindungsgemäßen Mischung werden in 75 Gew.-Teilen Xylol unter Zusatz von Ca-Dodecylbenzolsulfonat und Ricinusölethoxylat (jeweils 5 Gew.-Teile) gelöst. Bei der Verdünnung in Wasser ergibt sich eine Emulsion. Die Formulierung hat einen Wirkstoffgehalt von 15 Gew.-%.

D) Emulsionen (EW, EO)

25 Gew.-Teile einer erfindungsgemäßen Mischung werden in 35 Gew.-Teilen Xylol unter Zusatz von Ca-Dodecylbenzolsulfonat und Ricinusölethoxylat (jeweils 5 Gew.-Teile) gelöst. Diese Mischung wird mittels einer Emulgiermaschine (z.B. Ultraturax) in 30 Gew.Teile Wasser gegeben und zu einer homogenen Emulsion gebracht. Bei der Verdünnung in Wasser ergibt sich eine Emulsion. Die Formulierung hat einen Wirkstoffgehalt von 25 Gew.-%.

E) Suspensionen (SC, OD)

20 Gew.-Teile einer erfindungsgemäßen Mischung werden unter Zusatz von 10 Gew.-Teilen Dispergier- und Netzmitteln und 70 Gew.-Teilen Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs. Der Wirkstoffgehalt in der Formulierung beträgt 20 Gew.-% .

F) Wasserdispergierbare und wasserlösliche Granulate (WG, SG)

50 Gew.-Teile einer erfindungsgemäßen Mischung werden unter Zusatz von 50 Gew-Teilen Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs. Die Formulierung hat einen Wirkstoffgehalt von 50 Gew.-%.

G) Wasserdispergierbare und wasserlösliche Pulver (WP, SP)

75 Gew.-Teile einer erfindungsgemäßen Mischung werden unter Zusatz von 25 Gew.-Teilen Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs. Der Wirkstoffgehalt der Formulierung beträgt 75 Gew.-%.

2. Produkte für die Direktapplikation

H) Stäube (DP)

5 Gew.-Teile einer erfindungsgemäßen Mischung werden fein gemahlen und mit 95 Gew.-Teilen feinteiligem Kaolin innig vermischt. Man erhält dadurch ein Stäubemittel mit einem Wirkstoffgehalt von 5 Gew.-%.

J) Granulate (GR, FG, GG, MG)

0,5 Gew-Teile einer erfindungsgemäßen Mischung werden fein gemahlen und mit 99,5 Gew.-Teilen Trägerstoffe verbunden. Gängige Verfahren sind dabei die Extrusion, die Sprühtrocknung oder die Wirbelschicht. Man erhält dadurch ein Granulat für die Direktapplikation mit einem Wirkstoffgehalt von 0,5 Gew.-%.

K) ULV- Lösungen (UL)

10 Gew.-Teile einer erfindungsgemäßen Mischung werden in 90 Gew.-Teilen eines organischen Lösungsmittel z.B. Xylol gelöst. Dadurch erhält man ein Produkt für die Direktapplikation mit einem Wirkstoffgehalt von 10 Gew.-%.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier-

oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:100 bis 100:1, bevorzugt 1:10 bis 10:1, zugemischt.

Als Adjuvants in diesem Sinne kommen insbesondere in Frage: organisch modifizierte Polysiloxane, z.B. Break Thru S 240®; Alkoholalkoxylate, z. B. Atplus 245®, Atplus MBA 1303®, Plurafac LF 300® und Lutensol ON 30®; EO-PO-Blockpolymerisate, z. B. Pluronic RPE 2035® und Genapol B®; Alkoholethoxylate, z. B. Lutensol XP 80®; und Natriumdioctylsulfosuccinat, z. B. Leophen RA®.

Die Verbindungen I und II, bzw. die Mischungen oder die entsprechenden Formulierungen werden angewendet, indem man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindung(en) I und mindestens einem der Wirkstoffe II bei getrennter Ausbringung, behandelt.

Die Anwendung kann vor oder nach dem Befall durch die Schadpilze erfolgen. Herstellungsbeispiele

1.) Synthese von ortho-(3,4-Dichlophenyl)-anilin

Zu einer Lösung von 20,47 g 2-Brom-anilin, 24,98 g 2,4-Dichlorphenylboronsäure und 25,23 g Natriumcarbonat in einer Mischung von 150 ml Wasser und 450 ml Ethylenglycoldimethylether wurden 0,14 g Tetrakistriphenylphosphin-Palladium(O) gegeben. Man rührte 48 Std. unter Rückfluß. Der Ansatz wurde bei reduziertem Druck eingeengt. Der Rückstand wurde mit Methyl-tert-butylether aufgenommen, einmal mit wässriger Natriumhydrogencarbonatlösung und viermal mit Wasser gewaschen, über Natriumsulfat getrocknet und bei reduziertem Druck eingeengt. Nach chromatografischer Reinigung mit einer Mischung von Toluol und Cyclohexan (1:2) erhielt man 15,5 g des Produktes als hellgelbes Pulver.

2.) Synthese von 1-Methyl-3-trifluormethyl-N-(ortho-(3,4-dichlorphenyl)phenyl)-pyrazol-4-carbonsäureamid.

In 10 ml Tuluol wurden 0,32 g 1-Methyl-3-trifluormethyl-pyrazol-4-carbonsäurechorid, 0,36 g ortho-(3,4-Dichlorphenyl)anilin und 0,23 g Triethylamin gelöst. Nachdem 4 Std. bei Raumtemperatur gerührt wurde, wurden 20 ml Methyl-tert.-butylether zugegeben, zweimal mit 5%-iger Salzsäure, zweimal mit 5%iger Natronlauge und einmal mit wässriger Natriumchloridlösung gewaschen. Die organische Phase wurde über Natriumsulfat getrocknet und bei reduziertem Druck eingeengt. Nach chromatografischer Reinigung mit einer Mischung von Toluol und Methyl-tert.-butylether erhielt man 0,32 g des Produktes als farbloses Pulver; Fp.: 131-133˚C.

Tabelle 8

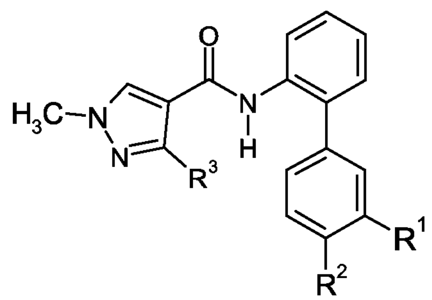

(I)

| Verbindung | X | $R^1$ | $R^2$ | $R^3$ | Fp. oder HPLC-Retentionszeit (min) |
|---|---|---|---|---|---|
| I.1 | O | Cl | Cl | $CF_3$ | 131-133˚C |
| I.2 | O | Cl | F | $CF_3$ | 133-134˚C |

(fortgesetzt)

| Verbindung | X | $R^1$ | $R^2$ | $R^3$ | Fp. oder HPLC-Retentionszeit (min) |
|---|---|---|---|---|---|
| I.3 | O | F | F | $CF_3$ | 126-128°C |
| I.4 | O | $CH_3$ | Cl | $CF_3$ | 109-111°C |
| I.5 | O | $CH_3$ | F | $CF_3$ | 126-127°C |
| I.6 | O | F | Cl | $CF_3$ | 149-150°C |
| I.7 | O | $NO_2$ | Cl | $CF_3$ | 3,36 |
| I.8 | O | $CH_3$ | $CH_3$ | $CF_3$ | 2,99 |
| I.9 | O | $CF_3$ | $NO_2$ | $CF_3$ | 3,49 |
| I.10 | O | $CH_3$ | $OCH_3$ | $CF_3$ | 3,55 |
| I.11 | O | $OCH_3$ | $OCH_3$ | $CF_3$ | 3,03 |
| I.12 | O | F | $OCH_3$ | $CF_3$ | 3,26 |
| I.13 | O | $OCH_3$ | Cl | $CF_3$ | 3,46 |
| I.14 | O | Cl | F | $CHF_2$ | 129-130°C |
| I.15 | O | F | F | $CHF_2$ | 122-123°C |
| I.16 | O | Cl | Cl | $CHF_2$ | 129-130°C |
| I.17 | O | F | Cl | $CHF_2$ | 166-167°C |
| I.18 | O | $CH_3$ | F | $CHF_2$ | 130-132°C |
| I.19 | O | $CH_3$ | Cl | $CHF_2$ | 145-146°C |

Anwendungsbeispiel

Die synergistische Wirkung der erfindungsgemäßen Mischungen ließ sich durch die folgenden Versuche zeigen:

Die Wirkstoffe wurden getrennt oder gemeinsam als eine Stammlösung aufbereitet mit 25 mg Wirkstoff, welcher mit einem Gemisch aus Aceton und/oder Dimethylsulfoxid und dem Emulgator Uniperol® EL (Netzmittel mit Emulgier- und Dispergierwirkung auf der Basis ethoxylierter Alkylphenole) im Volumen-Verhältnis Lösungsmittel-Emulgator von 99 zu 1 ad 10 ml aufgefüllt wurde. Anschließend wurde ad 100 ml mit Wasser aufgefüllt. Diese Stammlösung wurde mit dem beschriebenen Lösungsmittel-Emulgator-Wasser Gemisch zu der unten angegeben Wirkstoffkonzentration verdünnt. Alternativ dazu konnten die Wirkstoffe als handelsübliche Fertigformulierung verwendet und mit Wasser auf die angegebene Wirkstoffkonzentration verdünnt werden.

Die visuell ermittelten Werte für den Prozentanteil befallener Blattflächen wurde in Wirkungsgrade als % der unbehandelten Kontrolle umgerechnet. Der Wirkungsgrad (W) wurde nach der Formel von Abbot wie folgt berechnet:

$$W = (1 - \alpha/\beta) \cdot 100$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Calculating synergistic and antagonistic responses ....., Weeds 15, 20-22, 1967] ermittelt und mit den beobachteten Wirkungsgraden verglichen.

Colby Formel: $$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Wirksamkeit gegen Weizenmehltau verursacht durch *Erysiphe [syn. Blumeria] graminis* forma specialis. *tritici*

Blätter von in Töpfen gewachsenen Weizenkeimlingen wurden mit wässriger Suspension in der unten angegebenen Wirkstoffkonzentration bis zur Tropf-nässe besprüht. Die Suspension oder Emulsion wurde wie oben beschrieben hergestellt. 24 Stunden nach dem Antrocknen des Spritzbelages mit Sporen des Weizenmehltaus (*Erysiphe [syn. Blumeria] graminis* forma specialis. *tritici)* bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

**Patentansprüche**

**1. Fungizide Mischungen, enthaltend als wirksame Komponenten**

**1) mindestens ein 3,4-disubstituiertes Biphenylanilid der Formel I**

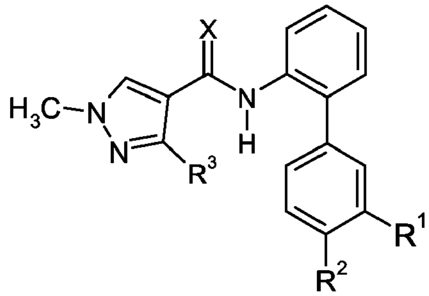

(I),

**in der X für Sauerstoff oder Schwefel, $R^1$ und $R^2$ unabhängig voneinander für Fluor, Chlor, Methyl, Cyano, Nitro, Methoxy oder Trifluormethyl und $R^3$ für Difluormethyl oder Trifluormethyl stehen, und**

**2) mindestens einen Wirkstoff II, ausgewählt aus den Gruppen A) bis L):**

**A) Azole, ausgewählt aus Bitertanol, Bromuconazol, Cyproconazol, Difenoconazol, Diniconazol, Enilconazol, Epoxiconazol, Fluquinconazol, Fenbuconazol, Flusilazol, Flutriafol, Hexaconazol, Imibenconazol, Ipconazol, Metconazol, Myclobutanil, Penconazol, Propiconazol, Prothioconazol, Simeconazol, Triadimefon, Triadimenol, Tebuconazol, Tetraconazol, Triticonazol, Prochloraz, Pefurazoate, Imazalil, Triflumizol, Cyazofamid, Benomyl, Carbendazim, Thiabendazol, Fuberidazol, Ethaboxam, Etridiazol, Hymexazol;**

**B) Strobilurine ausgewählt aus Azoxystrobin, Dimoxystrobin, Enestroburin, Fluoxastrobin, Kresoxim-methyl, Methominostrobin, Orysastrobin, Picoxystrobin, Pyraclostrobin, Trifloxystrobin, Enestroburin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethylester und 2-ortho-[(2,5-Dimethylphenyloxymethylen)phenyl]-3-methoxy-acrylsäuremethylester;**

**C) Carbonsäureamide ausgewählt aus Carboxin, Benalaxyl, Boscalid, Fenhexamid, Flutolanil, Furametpyr, Mepronil, Metalaxyl, Mefenoxam, Ofurace, Oxadixyl, Oxycarboxin, Penthiopyrad, Thifluzamid, Tiadinil, 3,4-Dichlor-N-(2-cyanophenyl)-isothiazol-5-carbonsäureamid, Dimethomorph, Flumorph, Flumetover, Fluopicolid (Picobenzamid), Zoxamide, Carpropamid, Diclocymet,**

**Mandipropamid, N-(2-(4-[3-(4-Chlor-phenyl)-prop-2-ynyloxy]-3-methoxy-phenyl)-ethyl)-2-methansulfonylamino-3-methyl-butyramid, N-(2-(4-[3-(4-Chlorphenyl)-prop-2-ynyloxy]-3-methoxy-phenyl)-ethyl)-2-ethansulfonylamino-3-methyl-butyramid, 3-(4-Chlor-phenyl)-3-(2-isopropoxy-carbonylamino-3-methyl-butyrylamino)-propionsäure-methylester, 4-Difluormethyl-2-methyl-thiazol-5-carbonsäure-N-(4'-bromo-biphenyl-2-yl)-amid, 4-Difluormethyl-2-methyl-thiazol-5-carbonsäure-N-(4'-trifluormethyl-biphenyl-2-yl)-amid, 4-Difluormethyl-2-methyl-thiazol-5-carbonsäure-N-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid und 3,4-Dichlor-isothiazol-5-carbonsäureN-(2-cyano-phenyl)-amid;**
**D) Heterocyclische Verbindungen ausgewählt aus Fluazinam, Pyrifenox, Bupirimat, Cyprodinil, Fenarimol, Ferimzon, Mepanipyrim, Nuarimol, Pyrimethanil, Triforin, Fenpiclonil, Fludioxonil, Aldimorph, Dodemorph, Fenpropimorph, Tridemorph, Fenpropidin, Iprodion, Procymidon, Vinclozolin, Famoxadon, Fenamidon, Octhilinon, Probenazol, 5-Chlor-7-(4-methyl-piperid in-1-yl)-6-(2,4,6-trifluor-phenyl)-[1,2,4]tri-azolo[1,5-a]pyrimidin, Anilazin, Diclomezin, Pyroquilon, Proquinazid, Tricyclazole, die Verbindung der Formel III (2-Butoxy-6-iodo-3-propyl-chromen-4-on)**

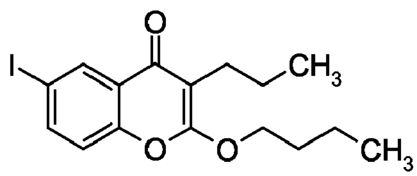

III,

**Acibenzolar-S-methyl, Captafol, Captan, Dazomet, Folpet, Fenoxanil, Quinoxyfen, 3-(3-Brom-6-fluor-2-methyl-indol-1-sulfonyl)-[1,2,4]triazol-1-sulfonsäuredimethylamid;**
**E) Carbamate ausgewählt aus Mancozeb, Maneb, Metam, Metiram, Ferbam, Propineb, Thiram, Zineb, Ziram, Diethofencarb, Iprovalicarb, Flubenthiavalicarb, Propamocarb, N-(1-(1-(4-cyanophenyl)ethansulfonyl)-but-2-yl)carbaminsäure-(4-fluorphenyl)ester, 3-(4-Chlor-phenyl)-3-(2-isopropoxycarbonylamino-3-methyl-butyrylamino)-propansäuremethylester, (2-Chlor-5-[1-(3-methylbenzyloxyimino)-ethyl]-benzyl)-carbaminsäuremethylester, (2-Chlor-5-[1-(6-methyl-pyridin-2-yl methoxyimino)-ethyl]-benzyl)-carbaminsäuremethylester;**
**F) Sonstige Fungizide, ausgewählt aus**
**Guanidine: Dodin, Iminoctadin, Guazatin,**
**Antibiotika: Kasugamycin, Streptomycin, Polyoxin, Validamycin A, Nitrophenylderivate: Binapacryl, Dinocap, Dinobuton,**
**Schwefelhaltige Heterocyclylverbindungen: Dithianon, Isoprothiolan, Organometallverbindungen: Fentin-Salze wie Fentin-acetat,**
**Organophosphorverbindungen: Edifenphos, Iprobenfos, Fosetyl, Fosetyl-Aluminium, Phosphorige Säure und ihre Salze, Pyrazophos, Tolclofos-methyl,**
**Organochlorverbindungen: Chlorothalonil, Dichlofluanid, Flusulfamid, Hexachlorbenzol, Phthalid, Pencycuron, Quintozen, Thiophanat-Methyl, Tolylfluanid,**
**Anorganische Wirkstoffe: Bordeaux Brühe, Kupferacetat,**
**Kupferhydroxid, Kupferoxychlorid, basisches Kupfersulfat, Schwefel, Sonstige: Cyflufenamid, Cymoxanil, Dimethirimol, Ethirimol, Furalaxyl, Metrafenon und Spiroxamin;**

in einer synergistisch wirksamen Menge.

2. Fungizide Mischungen nach Anspruch 1, enthaltend als Komponente 1) ein 3,4-disubstituiertes Biphenylanilid der Formel I, wobei $R^1$ und $R^2$ unabhängig voneinander für Fluor, Chlor, Methyl, Cyano, Methoxy oder Trifluormethyl stehen.

3. Fungizide Mischungen nach Anspruch 1, enthaltend als Komponente 1) ein 3,4-disubstituiertes Biphenylanilid der Formel I, wobei $R^1$ und $R^2$ unabhängig voneinander für Fluor, Chlor, Cyano oder Methoxy stehen.

4. Fungizide Mischungen nach Anspruch 1, enthaltend als Komponente 1) ein 3,4-disubstituiertes Biphenylanilid der Formel I, wobei $R^1$ und $R^2$ unabhängig voneinander für Fluor oder Chlor stehen.

5. Fungizide Mischungen nach Anspruch 1, enthaltend als Komponente 1) 1-Methyl-3-trifluormethyl-1H-pyrazol-4-carbonsäure (3',4'-dichlorbiphenyl-2-yl)-amid, 1-Methyl-3-trifluormethyl-1H-pyrazol-4-carbonsäure (3'-chlor-4'-fluorbiphenyl-2-yl)-amid, 1-Methyl-3-trifluormethyl-1H-pyrazol-4-carbonsäure (3',4'-difluorbiphenyl-2-yl)-amid, 1-Methyl-3-trifluormethyl-1H-pyrazol-4-carbonsäure (3'-fluor-4'-chlorbiphenyl-2-yl)-amid, 1-Methyl-3-difluormethyl-1H-pyrazol-4-carbonsäure (3'-chlor-4'-fluorbiphenyl-2-yl)-amid, 1-Methyl-3-difluormethyl-1H-pyrazol-4-carbonsäure (3',4'-difluorbiphenyl-2-yl)-amid, 1-Methyl-3-difluormethyl-1H-pyrazol-4-carbonsäure (3',4'-dichlorbiphenyl-2-yl)-amid, 1-Methyl-3-difluormethyl-1H-pyrazol-4-carbonsäure (3'-fluor-4'-chlorbiphenyl-2-yl)-amid.

**6.** Fungizide Mischungen nach einem der Ansprüche 1 bis 5, enthaltend mindestens eine Verbindung der Formel I und mindestens einen Wirkstoff der Formel II in einem Gewichtsverhältnis von 100:1 bis 1:100.

**7.** Mittel, enthaltend einen flüssigen oder festen Trägerstoff und eine Mischung gemäß den Ansprüchen 1 bis 5.

**8.** Verfahren zur Bekämpfung von pflanzenpathogenen Schadpilzen, **dadurch gekennzeichnet, dass** man die Schadpilze, deren Lebensraum oder die vor Pilzbefall zu schützenden Pflanzen, den Boden, Saatgüter, Flächen, Materialien oder Räume mit einer wirksamen Menge mindestens einer Verbindung I und mindestens einem Wirkstoff II gemäß den Ansprüchen 1 bis 5 behandelt.

**9.** Verfahren nach Anspruch 8, **dadurch gekennzeichnet, dass** man die Komponenten 1) und 2) gemäß dem Ansprüchen 1 bis 5 gleichzeitig, und zwar gemeinsam oder getrennt, oder nacheinander ausbringt.

**10.** Verfahren nach Anspruch 8 oder 9, **dadurch gekennzeichnet, dass** man die Komponenten 1) und 2) gemäß den Ansprüchen 1 bis 5 in einer Menge von 5 g/ha bis 2000 g/ha aufwendet.

**11.** Verfahren nach Anspruch 8 oder 9, **dadurch gekennzeichnet, dass** man die Komponenten 1) und 2) gemäß den Ansprüchen 1 bis 5 in einer Menge von 1 g bis 1000 g pro 100 kg Saatgut anwendet.

**12.** Saatgut, enthaltend die Mischung gemäß den Ansprüchen 1 bis 5 in einer Menge von 1 g bis 1000 g pro 100 kg Saatgut.

**13.** Verwendung der Verbindungen I und II gemäß den Ansprüchen 1 bis 5 zur Herstellung eines zur Bekämpfung von pflanzenpathogenen Schadpilzen geeigneten Mittels.

Europäisches Patentamt

# EUROPÄISCHER RECHERCHENBERICHT

Nummer der Anmeldung
EP 06 10 1045

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/034628 A (BAYER CROPSCIENCE AKTIENGESELLSCHAFT; WACHENDORFF-NEUMANN, ULRIKE; DAH) 21. April 2005 (2005-04-21)<br>* Tabellen A-L *<br>* Ansprüche 1-5,12-14 *<br>----- | 1-13 | A01N43/56<br>A01P3/00 |
| A | WO 2005/110089 A (BASF AKTIENGESELLSCHAFT; TORMO I BLASCO, JORDI; GROTE, THOMAS; SCHERER) 24. November 2005 (2005-11-24)<br>* Seite 9, Zeilen 16-26 *<br>* Ansprüche 1,5-13 *<br>----- | 1-13 | |
| D,A | EP 0 589 301 A (BASF AKTIENGESELLSCHAFT) 30. März 1994 (1994-03-30)<br>* Ansprüche 1-3,5-8 *<br>* Verbindungen 35-40 *<br>* Seite 25, Zeile 51 - Seite 27, Zeile 21 *<br>----- | 1-13 | |
| D,A | WO 2005/123689 A (BASF AKTIENGESELLSCHAFT; GEWEHR, MARKUS; MUELLER, BERND; GROTE, THOMAS) 29. Dezember 2005 (2005-12-29)<br>* das ganze Dokument *<br>----- | 1-13 | **RECHERCHIERTE SACHGEBIETE (IPC)**<br>A01N |
| D,A | WO 2005/123690 A (BASF AKTIENGESELLSCHAFT; GEWEHR, MARKUS; MUELLER, BERND; GROTE, THOMAS) 29. Dezember 2005 (2005-12-29)<br>* das ganze Dokument *<br>----- | 1-13 | |

Der vorliegende Recherchenbericht wurde für alle Patentansprüche erstellt

2

| Recherchenort | Abschlußdatum der Recherche | Prüfer |
|---|---|---|
| München | 2. März 2006 | Marie, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 06 10 1045

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2006

| Im Recherchenbericht angeführtes Patentdokument | Datum der Veröffentlichung | Mitglied(er) der Patentfamilie | Datum der Veröffentlichung |
|---|---|---|---|
| WO 2005034628 A | 21-04-2005 | DE 10347090 A1 | 04-05-2005 |
| WO 2005110089 A | 24-11-2005 | KEINE | |
| EP 0589301 A | 30-03-1994 | AT 219771 T | 15-07-2002 |
| | | AU 669732 B2 | 20-06-1996 |
| | | AU 4742293 A | 31-03-1994 |
| | | CA 2105503 A1 | 22-03-1994 |
| | | DE 4231517 A1 | 24-03-1994 |
| | | DK 589301 T3 | 22-07-2002 |
| | | ES 2179047 T3 | 16-01-2003 |
| | | HU 68762 A2 | 28-07-1995 |
| | | IL 106849 A | 28-01-2001 |
| | | JP 3530554 B2 | 24-05-2004 |
| | | JP 6199803 A | 19-07-1994 |
| | | NZ 248694 A | 28-03-1995 |
| | | PT 589301 T | 29-11-2002 |
| | | US 5438070 A | 01-08-1995 |
| WO 2005123689 A | 29-12-2005 | KEINE | |
| WO 2005123690 A | 29-12-2005 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 589301 A
- WO 0142223 A
- JP 9132567 A
- WO 2005123689 A
- WO 2005123690 A
- DE 102005007160
- WO 2005034628 A
- DE 2903612
- GB 1500581 A
- GB 2058059 A
- DE 1198125 A
- DE 2752096 A
- EP 281842 A
- DE 1164152 A
- DD 151404 A
- EP 224339 A
- EP 310550 A
- DE 2324020
- US 4664696 A
- GB 2098607 A
- EP 196038 A
- EP 15756 A
- EP 267778 A
- GB 857383 A
- BE 835579
- US 3991071 A
- WO 9616048 A
- EP 40345 A
- EP 234242 A
- BE 793867
- DE 2324010 A
- JP 54119462 A
- FR 2641277
- GB 1312536 A
- US 3903090 A
- DE 2207576 A
- US 1972961 A
- US 2317765 A
- US 2504404 A
- GB 996264 A
- US 2791605 A
- US 3248400 A
- BE 611960
- DE 642532 A
- US 2457674 A
- US 2720480 A
- US 3631176 A
- EP 545099 A
- US 3657443 A
- US 3249499 A
- US 3399214 A
- GB 1218623 A
- DE 1209799 A
- JP 1104514 A
- US 3937840 A
- WO 9942447 A
- WO 9748684 A
- EP 49854 A
- GB 13943373 A
- US 5240940 A
- US 3017415 A
- DE 1930540 A
- DE 1901421 A
- WO 9846607 A
- US 2526660 A
- JP 9323984 A
- US 3290353 A
- WO 9619442 A
- US 3957847 A
- US 4052395 A
- EP 78663 A
- DE 1493736 A
- EP 639574 A
- US 3499086 A
- EP 262393 A
- FR 2254276
- EP 472996 A
- WO 03042166 A
- US 5945567 A
- DE 2732257 A
- JP 10130268 A
- DE 1567169 A
- DE 1643347 A
- GB 1467561 A
- DE 682048 A
- US 2553770 A
- DE 1193498 A
- EP 120321 A
- EP 860438 A
- WO 0366610 A
- WO 9924413 A
- WO 0449804 A
- EP 1035122 A
- WO 0314103 A
- EP 1031571 A
- EP 1201648 A
- EP 1028125 A
- EP 382375 A

- EP 477631 A
- WO 9727189 A
- EP 253213 A
- EP 398692 A
- WO 9715552 A
- EP 278595 A
- WO 9601256 A
- EP 460575 A
- EP 226917 A
- WO 9846608 A
- WO 04049804 A
- WO 0366609 A
- WO 03053145 A
- WO 200142223 A


**In der Beschreibung aufgeführte Nicht-Patentliteratur**


- *Congr. Plant Pathol.,* 1968, vol. 1, 27
- *J. Am. Chem. Soc.,* 1947, vol. 69, 1234
- *Proc. 1990 Br. Crop. Prot. Conf. - Pests Dis.,* vol. 1, 459
- *Noyaku Kagaku,* 1983, vol. 8, 575
- *Fruits,* 1973, vol. 28, 545
- *Proc. 1988 Br. Crop Prot. Conf. - Pests Dis.,* vol. 1, 33
- *Proc. Br. Crop Prot. Conf.-Pests Dis.,* 1992, vol. 5-3, 411
- *Proc. Br. Crop Prot. Conf.-Pests Dis.,* 1984, vol. 1, 413
- *Bull. Soc. Chim. Fr.,* vol. 15, 891
- *Proc. Insectic. Fungic. Conf. 8.,* 1975, vol. 2, 715
- *Agric. Biol. Chem.,* 1973, vol. 37, 737
- *Proc. Br. Insectic. Fungic. Conf. 7.,* 1973, vol. 2, 673
- *Proc. 1988 Br. Crop Prot. Conf. - Pests Dis.,* vol. 1, 65
- The Pesticide Manual. The British Crop Protection Council, 1995, 482
- *Proc. Br. Crop Prot. Conf. - Pests Dis.,* 1998, vol. 2, 327
- The Pesticide Manual. The British Crop Protection Council, 1995, 474
- *C. R. Seances Acad. Agric. Fr.,* 1945, vol. 31, 24
- *Phytopathology,* 1962, vol. 52, 754
- *AGROW,* 1995, 22
- **D. PETROVA ; K. JAKOBCIC.** *Croat. Chem. Acta,* 1976, vol. 48, 49
- **R.S. COLBY.** Calculating synergistic and antagonistic responses. *Weeds,* 1967, vol. 15, 20-22